# EUROPÄISCHE PATENTSCHRIFT

(11) **EP 2 061 649 B1**
(45) Veröffentlichungstag und Bekanntmachung des Hinweises auf die Patenterteilung: **13.10.2010**
(21) Anmeldenummer: 07802181.3
(22) Anmeldetag: 06.09.2007
(51) Int. Cl.: B32B 3/26, A43B 21/00

(54) **SELBSTSCHLIEßENDER BELÜFTUNGSEINSATZ UND VERFAHREN ZU DESSEN HERSTELLUNG**
SELF-CLOSING VENTILATION INSERT AND METHOD FOR PRODUCING IT
GARNITURE DE VENTILATION À AUTO-FERMETURE ET PROCÉDÉ POUR SA FABRICATION

(30) Priorität: 06.09.2006 DE 102006042145
(43) Veröffentlichungstag der Anmeldung: 27.05.2009
(73) Patentinhaber: IQTEX Patentverwaltung UG (haftungsbeschränkt), 20249 Hamburg (DE)
(72) Erfinder: IQTEX Patentverwaltung UG (haftungsbeschränkt), 20249 Hamburg (DE)
(74) Vertreter: Kossak, Sabine
(86) Internationale Anmeldenummer: PCT/EP2007/007783
(87) Internationale Veröffentlichungsnummer: WO 2008/028659

(56) Entgegenhaltungen:
- EP-A2- 0 694 264
- WO-A-96/06590
- DE-A1- 4 120 010
- DE-A1- 10 101 388
- GB-A- 2 189 679
- US-A- 5 246 770

## Beschreibung

Gegenstand der Erfindung ist ein selbstschließender Belüftungseinsatz zur Belüftung von Textilien, Schuhen oder Gegenständen aufgebaut aus zumindest einer ersten luftdurchlässige Schicht, einem auf der ersten luftdurchlässigen Schicht angeordneten Absorber, einer zweite luftdurchlässige Schicht, Abdeckungen oberhalb der ersten und der zweiten luftdurchlässigen Schicht und zumindest einer Trägerschicht auf einer der Abdeckungen. Weiterhin ist Gegenstand der Erfindung ein Verfahren zur Herstellung eines Belüftungseinsatzes durch Spritzgießen.

In vielen Bereichen des täglichen Lebens ist eine Belüftung von Textilien oder Gegenständen gewünscht, um eine ausreichende Luftzirkulation zu gewährleisten. Deshalb werden beispielsweise Jacken oder Schuhe zumindest teilweise mit Stoffen versehen, die luftdurchlässig sind, um so eine guten Luft- und Feuchtigkeitsaustausch zu gewährleisten. Wenn die Luftzirkulation nicht gewährleistet ist, kommt es häufig zur Ansammlung von Feuchtigkeit, ggf. sogar zur Bildung von Kondenswasser. Es sind deshalb verschiedene Einsätze entwickelt worden, um eine Belüftung von Gegenständen, die beispielsweise aus Textilmaterial hergestellt sind, zu ermöglichen. Häufig werden die entsprechenden Gegenstände mit Öffnungen versehen, die nur mit einem luftdurchlässigen Stoff überspannt sind. Der Nachteil solcher Öffnungen ist, dass diese nicht wasserdicht sind und es so zu einem Wassereintritt von außen kommen kann. Für Bekleidung oder Schuhe sind daher vielfach Abdeckungen üblich, die mechanisch über die Belüftungsöffnung gespannt werden.

Zudem wurden verschiedene Textilmaterialien entwickelt, bei denen eine gezielte Steuerung der Durchlässigkeit des Textilmaterials für Wasser und Feuchtigkeit möglich ist. Wasserdampf durchlässige Materialien wie etwa Mikrofasern bzw. Membranen ermöglichen einen geringen Wasserdampfabtransport, aber keine Luftzirkulation. Ein entsprechendes flächiges Textilmaterial wird in der EP 1 054 095 A2 beschrieben, bei der sich in Abhängigkeit von der Temperatur das Material ausdehnt oder schrumpft und hierdurch Belüftungsöffnungen öffnet oder verschließt. Dieses textile Flächenmaterial erlaubt jedoch nur einen Einsatz in bestimmten Bereichen, in denen das Öffnen und Schließen durch Temperaturschwankungen gesteuert werden soll.

Aus der US 2005/0249917 A1 ist eine Membranstruktur bekannt, die eine gezielte Regelung der Durchlässigkeit in Abhängigkeit von den Umgebungsbedingungen zulässt. Diese Membranstruktur wird unter anderem für Schutzbekleidungen eingesetzt, bei denen Wasserdampf aus dem Inneren heraustransportiert werden soll, jedoch gefährliche Flüssigkeiten oder Gase nicht ins Bekleidungsinnere dringen sollen. Die beschriebene Membranstruktur besteht aus zwei Membranen, deren Positionierung zueinander bei einer bestimmten Anregung verschoben wird. Für die Funktionsfähigkeit des Membransystems ist eine exakte Positionierung der Membranen zueinander beim Herstellungsverfahren notwendig. Zudem muss in das Membransystem eine Kraftquelle, beispielsweise auf elektrischer Basis integriert sein, die eine Verschiebung der Membranen zueinander erlaubt.

Aus dem Hygienebereich sind zudem sogenannte Superabsorber bekannt, die große Mengen Wasser aufnehmen können und hierbei aufquellen. Die Wasseraufnahme ist reversibel, bei geringerer Umgebungsfeuchtigkeit wird das Wasser wieder an die Umgebung abgegeben. Diese Absorberfleece werden beispielsweise in Windeln oder damenhygienischen Artikeln und in der Bauindustrie eingesetzt. Allerdings können diese Absorberfleece beispielsweise für die Bekleidungsindustrie nicht eingesetzt werden, da sie keinen ausreichenden Tragekomfort gewährleisten würden. Eine mit dem Absorbervlies versehene Jacke würde in den mit Absorber versehenen Bereichen sehr stark aufquellen und hierdurch sowohl an Gewicht zunehmen, als auch bei Aufliegen auf anderen Schichten über eine entstehende Feuchtigkeitsbrücke Feuchtigkeit beispielsweise an die darunterliegende Kleidung abgeben. Zudem sind die Vliesmaterialien sehr empfindlich gegen mechanische Beschädigung und bereits ein Stoss gegen die mit Absorbervlies versehene Stelle könnte zu einer Beschädigung führen und der Absorber würde aus dem Vlies herausquellen. Zudem sind diese Stoffe nicht wasserdicht, da das nicht vom Absorber gebundene Wasser zwischen den Absorberkugeln hindurchsickert.

Aufgabe der vorliegenden Erfindung ist es daher, einen Belüftungseinsatz zu schaffen, der sich bei Kontakt mit Flüssigkeiten, insbesondere Wasser selbsttätig schließt, im trockenen Zustand eine gute Belüftung gewährleistet und ohne eine mechanische Abdeckung zu schließen ist und ausreichend gegen mechanische Beschädigungen geschützt ist. Der Belüftungseinsatz soll zudem so ausgestaltet sein, dass er in verschiedensten Einsatzbereichen, sowohl in Bekleidung, als auch Schuhen oder Abdeckungen, als auch bei Schutzbekleidung oder Gegenständen eingesetzt werden kann, in denen eine Luftzirkulation bei gleichzeitigem Feuchtigkeitsschutz gewünscht ist. Weiterhin ist es Aufgabe der Erfindung, ein Verfahren bereitzustellen, das eine schnelle und kostengünstige Herstellung des Belüftungseinsatzes im industriellen Maßstab erlaubt.

Die Aufgabe wird erfindungsgemäß gelöst durch einen selbstschließenden Belüftungseinsatz zur Belüftung von Textilien, Schuhen oder Gegenständen aufgebaut aus zumindest einem Kernelement mit einer ersten luftdurchlässige Schicht einem auf der ersten luftdurchlässigen Schicht angeordneten Absorber, der bei Kontakt mit Flüssigkeit, insbesondere Wasser aufquillt, einer zweite luftdurchlässige Schicht, Abdeckungen oberhalb der ersten und der zweiten luftdurchlässigen Schicht, einer Trägerschicht auf den Abdeckungen wobei die Abdeckungen und/oder die Trägerschichten die luftdurchlässigen Schichten zusammendrücken und eine Kammerstruktur ausbilden, wobei durch die Kammern die maximale Ausdehnung des Absorbers begrenzt wird und durch die Begrenzung eine Verdichtung des Absorbers während des Quellvorgangs erfolgt, die den Belüftungseinsatz verschließt. Das Verschließen wird durch einen taktilen Flüssigkeit- oder Wasserkontakt verursacht.

Die Aufgabe wird weiterhin gelöst durch ein Verfahren zur Herstellung eines Belüftungseinsatzes zur Belüftung von Textilien, Schuhen oder Gegenständen, wobei der Belüftungseinsatz aufgebaut ist aus zumindest einem absorberhaltigen Kernelement, einer oberen und einer unteren Abdeckung, einer Trägerschicht auf den Abdeckungen, wobei das Verfahren mindestens die Schritte umfasst
ggf. A. Anordnen einer Kernelementschicht auf einer Abdeckungsschicht und Anordnen einer zweiten Abdeckungsschicht auf der Kernelementschicht,
B. Ausstanzen eines Grundelementes oder Formschneiden des Grundelements mit z.B einem Stanzwerkzeug oder mit einem Laser aus zumindest der Kernelementschicht, Perforieren des Grundelementsund zum Erzeugen von Durchtrittsöffnung und ggf. Pressen und
C. Positionieren des perforierten Grundelementes in einer Spritzgussform, vorzugsweise über die Haltevorrichtungen,
D. Spritzgießen der Trägerschicht, wobei das Material der Trägerschicht beim Spritzgießen durch die Durchtrittsöffnungen des Grundelements gepresst wird.

Gegenstand der Erfindung ist weiterhin ein selbstschließender Belüftungseinsatz zur Belüftung von Textilien, Schuhen oder Gegenständen, aufgebaut aus zumindest
- einer Absorberschicht mit einem Absorber, der bei Kontakt mit Flüssigkeit aufquillt und
- einer Trägerschicht,
   **dadurch gekennzeichnet, dass**
die Trägerschicht
- zumindest teilweise luftdurchlässig ist, z.B. perforiert, und die Absorberschicht vollständig umgibt oder
- luftundurchlässig ist und die Absorberschicht bis auf Teilbereiche vollständig umgibt und
die Trägerschicht die maximale Ausdehnung des Absorbers so begrenzt, dass durch die Begrenzung eine Verdichtung des Absorbers während des Quellvorgang erfolgt, die den Belüftungseinsatz verschließt.

Weitere Ausführungsformen sind Gegenstand der Unteransprüche oder nachfolgend beschrieben.

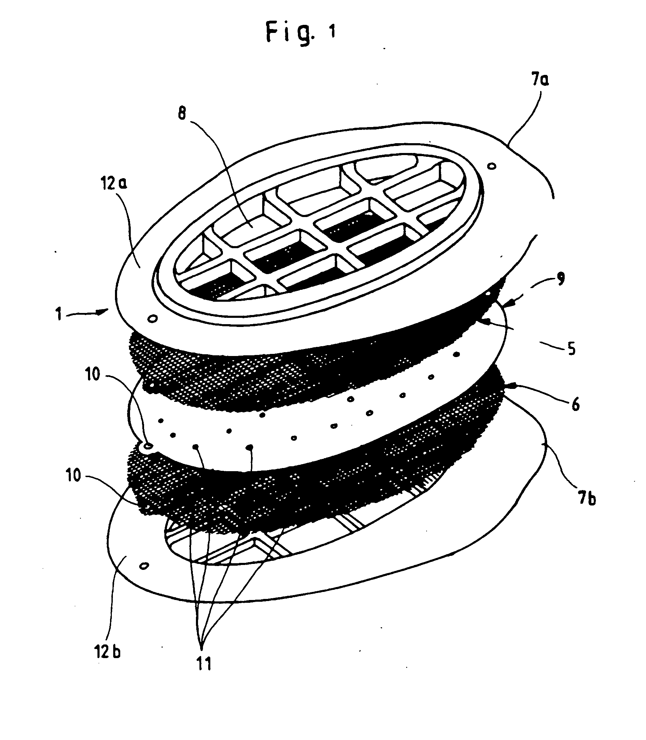

Der erfindungsgemäße Belüftungseinsatz wird somit in zwei Grundformen verwendet. Die eine Grundform, Grundform 1, bildet ein "Einzelelement" mit einer Kammerstruktur, wobei die Kammern die maximale Ausdehnung des Absorbers begrenzen. Eine solche Ausführungsform ist beispielsweise in den Figuren 1 bis 3 dargestellt. Die andere Grundform, Grundform 2, des erfindungsgemäßen Belüftungseinsatzes ist ein Flächengebilde oder integriertes Belüftungselement, bei dem die Ausdehnung des Absorbers durch eine Trägerschicht begrenzt wird.

In einer Ausführungsform weist das Kernelement aus den luftdurchlässigen Schichten und der Absorberschicht und ggf. die obere und untere Abdeckung Haltevorrichtungen auf, die eine Positionierung des Elements in der Spritzgussform erlauben. Die Haltevorrichtungen sind beispielsweise Löcher, Klebeflächen, Strukturen oder Pins, die eine Positionierung in der Spritzgussform unterstützen bzw. ermöglichen. Zusätzlich oder alternativ sind die Haltevorrichtungen Bestandteil der entsprechenden Spritzgussform.

Das Kernelement und ggf. die Abdeckungen weisen zusätzlich bevorzugt Durchtrittsöffnungen auf, durch die bei der Herstellung des Belüftungseinsatzes das fließfähige Material für die Trägerschicht hindurchfließt. Die Durchtrittsöffnungen können beispielsweise Löcher in den Schichten sein, die bevorzugt regelmäßig in der Schicht angeordnet sind. Wenn das fließfähige Material, z.B. ein Kunststoff bei der Herstellung durch die Durchtrittsöffnungen hindurchfließt, werden gleichzeitig Ober- und Unterseite der Trägerschicht, sowie ggf. das Schutzgitter und die Verbindungsflächen ausgebildet. Zudem werden die Oberseite und die Unterseite der Trägerschicht durch das Material, welches die Durchtrittsöffnungen ausfüllt, fest miteinander verbunden.

Je nach Höhe und Durchmesser der der aufgefüllten Durchtrittsöffnungen wird der Abstand, welcher bei der Quellung des Absorbers zur Verfügung steht, definiert und fixiert. Erfindungsgemäß weniger bevorzugt ist das fließfähige Material für die Herstellung der Trägerschicht ohne Durchflussöffnungen durch die luftdurchlässigen Schichten, den Absorber und ggf. die Abdeckungen zu spritzen. Durch den Einsatz von Durchtrittsöffnungen werden wesentlich bessere Qualitätsergebnisse und Bondings erzielt. Die Durchtrittsöffnungen können in einer flexiblen Anzahl und Formgebung benutzt werden.

Die Teilbereiche der Trägerschicht, die die Schichten miteinander verbinden, sind bei Ausführung als Einzelelement derart angeordnet, dass an den Absorber angrenzenden Teilbereiche z.B. ringförmig oder wabenförmig umschlossen werden, wodurch der Absorber in einem Schichtenaufbau derart eingebunden ist, dass er bei einer Quellung in seiner Ausdehnung begrenzt wird. Zusätzlich hat die Einbringung in den Schichtenaufbau den Vorteil, dass der Absorber in Position gehalten wird und nicht aus dem Belüftungseinsatz herausfallen kann. In jedem Fall muss das fließfähige Material, aus dem u.a. die Trägerschicht besteht, so angeordnet sein, dass an den Absorber angrenzende Teilbereich freigelassen werden, um eine Luftdurchlässigkeit und Wasserdunstdurchlässigkeit zu gewährleisten. Dieses kann auch durch nachträgliches Perforieren der Schicht wieder hergestellt werden.

Zusätzlich können die Durchflussöffnungen auch genutzt werden, um Steckverbindungen, wie Pins, anzubringen, welche eine Fixierung von übereinanderliegenden Schichten oder Bestandteilen ermöglichen, die Schichten in einer vorbestimmten Position halten oder deren Ausdehnungskompression kontrollieren. Diese Ausführung ist jedoch weniger bevorzugt.

Besonders bevorzugt ist das Kernelement des Belüftungseinsatzes aus luftdurchlässigen Schichten und Absorberschicht einteilig ausgebildet, besonders bevorzugt als mit Absorber ausgerüstetes Vlies oder Nonwoven. In einer Ausführungsform sind Kernelement und Abdeckungen einteilig ausgebildet, besonders bevorzugt als Sandwichlaminat.

Beispielsweise ist die luftdurchlässige Fläche auf einer Seite mit einem Absorber beschichtet, der die Absorberschicht bildet und durch Umschlagen der luftdurchlässigen Fläche wird die erste luftdurchlässige Schicht und die zweite luftdurchlässige Schicht ausgebildet, wobei die beiden mit Absorber beschichtete Flächen aufeinander zu liegen kommen.

Für beide Grundformen sind hinsichtlich Material und Aufbau folgende Ausführungsformen möglich:

### Absorber

Der Absorber ist bevorzugt ein quellfähiges Polymer, ausgewählt aus der Gruppe Polyacrylsäure, Polyacrylsäurecopolymere und vernetzten Natriumpolyacrylat oder Kasein, Eiweiß oder ein Thermoplast-Elastomer-Gemisch. Vorzugsweise ist der Absorber mit einem Füllstoff vermischt und Füllstoff und Absorber bilden gemeinsam die Absorberschicht aus. Als Absorber können beispielsweise Superabsorber verwendet werden, wie HySorb® von der BASF AG oder Favor® von der Degussa AG.

Ist der Absorber bzw. die Absorberschicht gemeinsam mit der luftdurchlässigen Schicht oder der Trägerschicht als Absorberfleece ausgebildet, so kann beispielsweise Luquafleece ® von der BASF als Material verwendet werden.

Die Auswahl des Absorbers hängt davon ab, durch welche Flüssigkeit die Quellung des Absorbers erfolgen soll. Bei einem Einsatz für die Quellung von Wasser werden bevorzugt die genannten Superabsorber verwendet. In einer Ausführung ist es auch möglich zwei oder mehrere Absorbermaterialien zu kombinieren, so dass ein Absorber auf Wasser und ein anderes Absorbermaterial auf eine andere Flüssigkeit anspricht.

Der Absorber kann beispielsweise auch nachgefüllt werden, z.B. durch Hochdruck eingepresst oder Injektion nachträglich zwischen die Trägerschichten eingebracht werden.

### Füllstoff

Als Füllstoff können beispielsweise eingesetzt werden Polymerverbindungen, Thermoplast-Elastomer-Composite, tierische Fasern, wie Haare, Daunen, Leder, Knochen, Horn, pflanzliche Fasern wie Baumwolle, Cellulose, Pappe, Leinen, Kokosschalen, Holz, Faser, Kräuter-, metallische-, mineralische- Fasern, Carbonfaser-Gewirke, Gummi bzw. Materialien oder Mischungen hieraus. Pulver oder Granulate oder Materialien mit wärmespeichernden Eigenschaften z.B. mikroverkapselte Wachse. Das Füllmaterial dient z.B. dazu, das Gewicht zu reduzieren. Wird ein flüssigkeits- oder wasserleitendes Füllmaterial eingesetzt, kann dieses zudem die zuvor aufgenommene Flüssigkeit bzw. das Wasser im Absorbers durch Bildung einer gezielten Feuchtigkeitsbrücke nach außen leiten und so eine schnellere Verdunstung des Wassers herbeiführen. Das Füllmaterial und die Menge des Füllmaterials sind so gewählt, dass die Quellung des Absorbers und die hierdurch bedingte Schließung des Belüftungseinsatzes nicht beeinträchtigt sind. Dient das Füllmaterial zur Bildung einer gezielten Feuchtigkeitsbrücke, so steht es vorteilhafterweise mit Verdünstungsflächen am zu belüftenden Objekt in Kontakt. Solche Verdünstungsflächen können z.B. Obermaterialien eines Bekleidungsstücks oder eines Schuhs sein. Der Einsatz eines solchen Füllmaterials ist insbesondere dann sinnvoll, wenn das Obermaterial selbst keine Feuchtigkeitsbrücke zum Innenmaterial bilden kann und somit nur eine geringe Verdunstungsfläche zur Verfügung steht. Vorteilhafterweise ist in diesem Fall die zum Benutzer hin gerichtete Seite des Belüftungseinsatzes so ausgebildet, dass sie eine weiterleitende Feuchtigkeit in den Innenraum verhindert.

### Trägerschicht

Die Trägerschicht kann beispielsweise aus folgenden Materialien oder Mischungen hiervon bestehen:
Polymerverbindungen, Polymerschäume, Thermoplast-Elastomer-Composite, Stoffe mit Nanopartikeloberflächen tierischen Materialien z.B Knochen, Horn, Fasern, pflanzliche Materialien z.B. Kokosschalen, Holz, Kräuter, Fasern, Kohlenstoffverbundmaterialien z.B. Carbon, Metall, mineralischen Verbundstoffen, Keramik, Glas, Gummi, Harze, Leder, Pappe und /oder Proteinverbundstoffe. Die Materialien werden entweder selbst im Spritzguss verarbeitet oder mit z.B. Kunststoffen verbunden.

In einer Ausführungsform der Grundform 1 ist die Abdeckung Teil der Trägerschicht und wird bei der Herstellung der Trägerschicht mit ausgebildet. Bevorzugt bildet die Trägerschicht ein Schutzgitter oder eine Schutzschicht aus, die den Belüftungseinsatz vor Beschädigungen beispielsweise mechanischen Beschädigungen durch Stöße, schützt. Wenn die Trägerschicht gleichzeitig die Abdeckung bildet, verfügt die Abdeckung in Teilbereichen über Öffnungen, die vorzugsweise durch Perforation ausgebildet werden. Diese Öffnungen können durch z.B. Ausstanzen, Bohren, Lasern, Schmelzen, Schneiden, hergestellt werden oder bereits durch die Verwendung entsprechender Werkzeuge während des Spritzgussvorgangs gebildet werden. In einer weniger bevorzugten Ausführungsform wird die luftdurchlässige Schicht einteilig durch die Trägerschicht ausgebildet, wobei durch Informspritzen entsprechende Luftdurchtrittsöffnungen ausgebildet werden und durch die Vielzahl von Öffnungen die Luftdurchlässigkeit gewährt ist.

In einer weiteren Ausführungsform der Grundform 1 weist der erfindungsgemäße Belüftungseinsatz zusätzlich Verbindungsflächen auf, die bevorzugt aus demselben Material wie die Trägerschicht oder die Abdeckungen bestehen, besonders bevorzugt als Verlängerung der Trägerschicht ausgebildet sind. Die Verbindungsflächen dienen zur Befestigung des Belüftungseinsatzes an dem zu belüftenden Gegenstand oder Material. Die Verbindung an den Verbindungsflächen kann beispielsweise durch Magnetverbindung, Klickverbindung, Steckverbindung, Schiebeverbindung, Stülpverbindung, Klebverbindung, Falzverbindung, thermoplastisches Verschweißen oder Nähte hergestellt werden. Mit Hilfe der Verbindungsflächen wird der erfindungsgemäße Belüftungseinsatz so über einer Öffnung in der zu belüftenden Textil oder dem zu belüftenden Gegenstand angeordnet, dass er diese Öffnung vollständig bedeckt. In einer Ausführungsform sind die Verbindungsflächen dabei so ausgestaltet, dass der erfindungsgemäße Belüftungseinsatz austauschbar ist. Der Belüftungseinsatz kann dabei als Einmalartikel konstruiert sein, der nach einmaligem Gebrauch ausgetauscht wird. Der Belüftungseinsatz ist weniger bevorzugt als nicht reversibel sich abdichtende Fläche verarbeitet.

In einer Ausführungsform der Grundform 1 sind die Verbindungsflächen so ausgestaltet, dass ein Austauschen des Belüftungseinsatzes durch einen neuen Belüftungseinsatz möglich ist. Ein solcher Austausch kann auch dazu dienen, um einen Belüftungseinsatz mit anderen Eigenschaften, beispielsweise einen Belüftungseinsatz der zusätzliche Funktionen aufweist an dem zu belüftenden Objekt einzusetzen. Diese Ausführungsform wird beispielsweise insbesondere bei Schutzhelmen oder Elektroartikeln eingesetzt.

In einer weiteren Ausführungsform der Grundform 1 sind die Verbindungsflächen mit Strukturen oder Aus- bzw. Einwölbungen versehen, die ein Befestigen des Belüftungseinsatzes am zu belüftenden Objekt erlauben. Die erfindungsgemäßen Belüftungseinsätze können so ausgeführt sein, dass sie zusätzlich zu den Verbindungsflächen oder an Stelle der Verbindungsflächen Verbindungselemente aufweisen, die ein Befestigen am Objekt erlauben. Diese Verbindungselemente sind beispielsweise zusätzliche Bauteile und die Verbindung kann beispielsweise durch Umspritzen mit Kunststoff, kleben, schrauben, nieten, Steckverbindungen oder nähen erfolgen. Die Herstellung der Verbindungsflächen erfolgt in unterschiedlichen Stärken, je nach Anwendungsbereich. Die Flächen sind bevorzugt dünn und laufen nach außen hin auf 0 zusammen. Bevorzugt können die Verbindungsflächen bereits während der Spritzgussherstellung texturiert werden oder nachträglich durch mechanisches Aufrauen, Ätzen, Bestrahlen mit UV-Licht oder Behandlung mit Gasen, wie Ozon textuiert werden. Eine entsprechend texturierte Oberfläche der Verbindungsflächen erleichtert die Befestigung am zu belüftenden Objekt, wenn Verbindungsweisen wie kleben oder verschweißen oder ähnliches gewählt werden.

In einer weiteren Ausführungsform des erfindungsgemäßen Belüftungseinsatzes ist der zu belüftende Gegenstand so ausgebildet, dass der erfindungsgemäße Einsatz Bestandteil des Objektes ist. Beispielsweise in Schuhen, Textilien oder Schutzhelmen ist der erfindungsgemäße Belüftungseinsatz vorteilhafterweise in das Objekt integriert, beispielsweise als Kunststoffspritzgussteil. So können z.B. Belüftungseinsätze auf eine Schuhsohle vulkanisiert werden.

Je nach Anordnung dienen die Verbindungsflächen gleichzeitig bevorzugt als Dichtungsfläche und dichten die Öffnung des zu belüftenden Gegenstands gegen das Eindringen von Luft, Schmutz, Staub, Pollen und Wasser ab.

Ein erfindungsgemäßer Belüftungseinsatz kann derart mit einem Objekt verbunden sein, dass die gewählten Verbindungsflächen ein nachträgliches drehen/ ausrichten ermöglichen (Steck/ Magnetverbindungen/ Schiebeverbindungen). Dies ist sinnvoll, wenn ein Träger eines entsprechend ausgestatteten Motorradhelmes seine Belüftungsfläche vor Fahrtantritts einstellen möchte, wie viel Luft bzw. Fahrtwind in das Helm- oder das Schutzanzuginnere oder Schutzstiefelinnere gelangen soll.

Ein erfindungsgemäßer Aufbau kann über Strukturen, wie etwa Lamellen verfügen, welche eine Luftströmung/ Lufteinleitung in den abzudeckenden Gegenstand (Schutzhelme, Motorradanzüge) positiv beeinflussen. Entsprechende Strukturen können Windstärke sensitiv sein, d.h. bei einer bestimmten Intensität des Fahrtwindes würden dies aufgrund ihrer Materialeigenschaften und Ausgestaltung nachgiebig. Die Intensität und Luftmenge kann auf diese Weise automatisch gesteuert werden.

Eine zusätzliche Schicht bzw. die Trägerschicht/ oder das Schutzgitter kann derart konstruiert sein, dass sie ein beweglicher-Bestandteil des Aufbaus ist. Dies ist vorteilhaft bei der Verwendung an Schutzhelmen oder Schutzbrillen, um die Lüftungswirkung zu regulieren z.B. durch ein Ausrichten der Lüftungsschlitze. Das Ausrichten kann hierbei durch manuelle Ausrichtungen oder durch elektronische Steuerungen erfolgen oder von Umwelteinflüssen abhängig sein, wie etwas der Intensität des Fahrwindes.

Die Verbindungsflächen des erfindungsgemäßen Belüftungseinsatzes sind in einer Ausführungsform so strukturiert, dass es auch dem Endverbraucher möglich ist, einen Belüftungseinsatz mit einem gewünschten Gegenstand dauerhaft zu verbinden wie einen Flicken, z. B. durch Bügelflächen, Nähte, Kleber, Nieten.

Je nach Anwendungsgebiet kann der erfindungsgemäße Belüftungseinsatz in beiden grundformen so ausgeführt sein, dass er zusätzliche Duftstoffe, Farbstoffe oder Wirkstoffe enthält und/oder Filtermaterialien, die zu einer Verbesserung der in das Objekt transportierten Luft dienen. Bei Einsatz als Filter kann der erfindungsgemäße Belüftungseinsatz beispielsweise mit Aktivkohle, Silber und/oder weiteren Duft- oder Wirkstoffen beschlagen sein. Die Duft-oder Wirkstoffe werden ggf. in Anhängigkeit von der Feuchtigkeit abgegeben.

In einer Aufführung werden die Duftstoffe, Farbstoffe oder Wirkstoffe nachträglich vom Anwender auf den erfindungsgemäßen Belüftungseinsatz aufgebracht bzw. eingebracht. So können z.B. Belüftungseinsätze in Kinderschuhen nachträglich mit Duftstoffen oder Farbstoffen versehen werden, damit das Kind seinen Schuh individuell gestalten kann. Geeignete Wirkstoffe sind beispielsweise geruchsbindende Stoffe, mikrobiozid wirksame Stoffe oder Insekten vertreibende Stoffe. Als eine Art von Wirkstoff kann der Belüftungseinsatz mit Indikatorstoffen versehen sein, die anzeigen wenn der Belüftungseinsatz mit Substanzen in Berührung gekommen ist, die die Funktionsfähigkeit einschränken oder zerstören. Diese Anzeige kann beispielsweise durch einen Farbumschlag erfolgen. Als ein Wirkstoff können Substanzen zugesetzt sein welche die Trocknung des Absorbers beschleunigen wie etwa Materialien, welche dem Absorber Feuchtigkeit entziehen oder durch kinetische Energie Strom oder chemische Reaktion Wärme erzeugen. Es ist auch denkbar den Belüftungseinsatz beheizbar auszuführen und hierdurch eine beschleunigte Trocknung des Absorbers zu erreichen.

Ein erfindungsgemäßer Belüftungseinsatz verfügt bevorzugt über Strukturen/ Ausformung, welche eine wasserdichte Verbindung mit einem abzudeckenden Gegenstand erlaubt. Dies ist besonders wichtig; wenn die Erfindung als austauschbares Element hergestellt wurde. Der Belüftungseinsatz kann z.B. über eine Auswölbung z.B. ausgebildet als umlaufender Rand in eine Einwölbung z.B. als passendes Gegenstück zu dem umlaufenden Rand welche sich in dem Gegenstand befindet, eingesetzt werden. Das ganze ist dann eine Steckverbindung, welche einen Austausch ermöglicht und je nach Details eine wasserdichte Verbindung erlaubt.

In einer weiteren Ausführungsform sind die luftdurchlässigen Schichten direkt mit dem Absorber verbunden, wobei die Verbindung z.B. mit einem thermoplastischen Kleber, einem Primer, Kunststoff oder einem Kleber erzeugt wird. In dieser Ausführungsform ist das Material aus luftdurchlässigen Schichten und Absorber vorzugsweise eine Meterware, bei der die erste und zweite luftdurchlässige Fläche der zwischen den Flächen angeordneten Absorberschicht und ggf. die Abdeckungen über durch die Flächen hindurchgehende Halter miteinander verbunden sind, wobei die Halter vorzugsweise streifenförmig, punktförmig, kreisförmig oder linienförmig ausgebildet sind.

Beispielsweise kann mindestens eine der Abdeckungen direkter Bestandteil eines Bekleidungsstückes z.B. einer Jacke, etwa dessen Obermaterial sein.

In einer weiteren Ausführungsform bestehen die Abdeckungen aus dem Material des Innenfutters und/oder dem Material eines Obermaterials. Das so erzeugte mehrschichtige Flächenmaterial wird vorzugsweise als Meterware hergestellt. Vorteilhafterweise besteht das zu belüftende Bekleidungsstück bei dieser Ausführung teilweise oder vollständig aus diesem flächigen Material.

Bevorzugt sind die beiden Trägerschichten einteilig ausgebildet und werden bevorzugt im Spritzgussverfahren hergestellt. In einer anderen Ausführungsform kann die Trägerschicht auch aus mehreren Teilen bestehen, z.B. aus nebeneinander und teilweise übereinander liegenden Streifen. Weniger bevorzugt ist die Trägerschicht auf Unterseite und Oberseite unterschiedlich ausgestaltet, z.B. die Unterseite einteilig als perforierte Fläche und die Oberseite aus mehreren Teilen, wie Streifen, ausgebildet.

Wenn die Trägerschicht einteilig ausgebildet ist, befinden sich vorzugsweise zwischen den luftdurchlässigen Schichten Verbindungen zwischen der Oberseite der Trägerschicht und der Unterseite der Trägerschicht und die luftdurchlässigen Schichten sind vorzugsweise fest mit der Trägerschicht verbunden, so dass die luftdurchlässigen Schichten in ihrem Abstand zueinander fixiert werden. Hierdurch werden Kammern von definierter Größe ausgebildet, die die Ausdehnung des Absorbers begrenzen. Gleichzeitig werden bevorzugt auch die Abdeckungen durch die Trägerschicht fest miteinander verbunden, wobei bevorzugt die Absorberschicht im Durchmesser geringer ist als die durch die Abdeckungen gebildete Kammer.

Der luft- und wasserdurchlässige Materialanteil des erfindungsgemäßen Belüftungseinsatzes ist ggf. so ausgeführt, dass er sich an den trockenen Absorber elastisch anpasst, jedoch bei einer Ausdehnung des Absorbers das Volumen derart begrenzt, dass sich der Absorber zu einer wasserdichten Fläche verdichtet. Die Trägerschichten und die Verbindungsflächen haben nicht nur die Aufgabe eine Ausdehnung zu reduzieren oder zu unterbinden, sondern sie können zudem die Aufgabe einer Distanzfläche haben. Dieses ist wichtig, z.B. bei Textilien, Handschuhen oder Schuhen, zwecks Vermeidung eines Absorberaustritts durch die luftdurchlässigen Flächen, wenn dieser stark belastet werden. Diese Aufgabe kann auch erfüllt werden durch Füllstoffe, vor allem wenn diese über Hohlräume verfügen z.B. Hülsen aus einem luft- und wasserdurchlässigen Material, Abdeckungen, die über dem Absorber zugewandte Strukturen verfügen oder so ausgebildet sind, dass ein enthaltener Absorber nicht zu stark zusammengepresst wird.

Eine Belastung des Absorbers wird beispielsweise auch durch Abdeckelemente vermieden, wenn diese mit einer Abdeckung so verbunden sind, dass ein Niederpressen der mit Absorber befüllten Bereich vermindert wird. Dieselbe Funktion kann auch von dem Schutzgitter bzw. den Schutzschichten übernommen werden, die den Belüftungseinsatz vor mechanischer Beschädigung und insbesondere einem Zusammendrücken schützen.

In einer weiteren Ausführung können die erfindungsgemäßen Belüftungselemente mit einer zusätzlichen perforierten Abdeckung versehen sein, die einen zusätzlichen Schutz vor mechanischen Einflüssen bietet. Gerade beim Einsatz in Schuhsohlen von Sicherheitsschuhen können die Perforationsöffnungen auch in einem schrägen Winkel zur Unterseite der Schuhsohle angeordnet sein, um so beispielsweise das Eindringen von senkrecht stehenden Fremdkörpern, wie z.B. Nägeln, zu vermeiden. Die Abdeckungen sind bevorzugt aus einem

Material gestaltet, das einen effektiven Schutz vor mechanischen Einflüssen bietet, wie z.B. Kevlar.

Die Abdeckungen können aus verschiedensten Materialien besteht und als woven oder non-woven-Material hergestellt sein. Die Abdeckungen können beispielsweise aus einem der folgenden Materialien hergestellt sein:
Polymerverbindungen, Pappe, Leder, Thermoplast-Elastomer-Composite, Kevlar, Keramik, tierische Fasern wie z.B. Wolle, Haare, Daunen, Leder, Knochen, Horn; pflanzliche Fasern wie z.B. Baumwolle, Cellulose, Leinen, Kokosschalen, Holz, Faser, Kräuter-, Metallische-, Mineralische- Fasern, menschliche Haare, Carbonfaser-Gewirke, Gummi. bzw. Materialien oder Mischungen hieraus.

Die Abdeckungen werden beispielsweise durch Spritzgießen, Extrudieren oder Kallandieren, als Folien oder Platten hergestellt, wobei die Öffnungen in den Abdeckungen auch durch beispielsweise Ausstanzen, Bohren, Stechen, Lasern, Schmelzen, Schneiden oder Fräsen hergestellt sein können.

Besonders bevorzugt sind die Abdeckungen ein feinmaschiges Netz, etwa ein metallisches Netz, ein Metallmesh oder ein Nylonmesh.

In einer Ausführungsform ist der erfindungsgemäße Belüftungseinsatz als textiles Flächengebilde oder als Teil eines textilen Flächengebildes ausgebildet. Diese textilen Flächengebilde sind entweder Woven oder Nonwovenmaterialien. Zudem kommen Flächengebilde in Betracht, welche wenigstens in Bereichen des Absorbers über luftdurchlässige Öffnungen verfügen und somit die luftdurchlässige Schicht bilden. Diese Öffnungen können nachträglich in die Fläche eingebracht sein. Diese textilen Flächengebilde werden als Laminat oder Flächengebilde hergestellt, welches Hohlräume aufweist, die nachträglich befüllt werden. Die Hohlräume sind zumindest mit einem Absorber befüllt, welcher ggf. an ein Trägermaterial gebunden ist. Optional sind die Hohlräume mit Füllmaterial, das auch als Abstandshalter dient oder zusätzlichen Abstandshaltern befüllt. Die Abstandshalter sind bevorzugt Kugeln, welche ein starkes Zusammenpressen der Flächen verhindern.

Das textile Flächengebilde ist vorzugsweise mit Strukturen, wie z.B. dem Schutzgitter oder der Trägerschicht versehen. Bei der Verwendung des textilen Flächengebildes können z.B. durch Knicken, Pressen, Nähte oder andere Verbindungen diese Strukturen an der der Umwelt zugewandten Seite angeordnet werden. Diese Strukturen dienen zum einen als Verdunstungsflächen, zum anderen zur gezielten Leitung des Luftstroms. Sind die Strukturen als Schutzgitter oder Vorsprünge ausgebildet, dienen sie z.B. als Abstandshalter. Wird das textile Flächengebilde zwischen einem Obermaterial und ggf. einem Innenfutter oder einer anderen Schicht eingebracht, wie etwa der innenliegenden Polsterung eines Motorradhelms oder dem Innenfutter einer Jacken, bilden die Strukturen Luftpolster, in denen eine zusätzliche Luftzirkulation ermöglicht wird. Durch das gebildete Luftpolster wir zudem eine Isolationsschicht erzeugt, welche sich positiv auf das Trageklima auswirkt. Optional sind die Strukturen nur oder zusätzlich auf der dem Körper zugewandten Seite angeordnet und können ebenfalls die aufgeführten Funktionen und Vorteile übernehmen. Es ist denkbar, die Strukturen sowohl auf der Ober- und der Unterseite des Flächengebildes anzuordnen.

Wenn der erfindungsgemäße Belüftungseinsatz über Kunststoffanteile verfügt, beispielsweise wenn die Trägerschicht und/oder das Schutzgitter zumindest teilweise aus Kunststoff hergestellt sind, dienen diese Teile zusätzlich als Distanzflächen bzw. als Verdunstungsflächen wie bei der vorstehenden Ausführungsform beschrieben.

Das beschriebene Flächengebilde kann beispielsweise auf folgende Weise hergestellt werden: die luftdurchlässigen Flächen werden teilweise mit einem Klebstoff beaufschlagt, wobei Teilbereiche freigelassen werden, die später die luftdurchlässigen Hohlräume bilden. Durch die Beaufschlagung mit dem Klebstoff werden die so behandelten Bereiche wasserundurchlässig. Die luftdurchlässigen Flächen werden mit einem weiteren Klebstoff versehen, der zur Befestigung des Absorbers dient. Der Klebstoff kann hierzu bereits den Absorber enthalten oder mit diesem durchmischt sein. Optional können Abstandshalter und/oder Füllmaterialien auf den zweiten Klebstoff aufgetragen werden. Die Herstellung eines solchen Flächengebildes ist beispielsweise in einem Druckverfahren möglich. Dabei werden der Kleber, der zur Verbindung von zwei luftdurchlässigen Schichten dient und der Kelbstoff für den Absorber sowie der Absorber in einem Arbeitsgang aufgetragen.

Das Flächengebilde bzw. der Schichtenaufbau kann in unterschiedlichen Designs ausgestaltet sein.

Die beschriebenen Flächengebilde werden ggf. bereits im Herstellungsverfahren in luftdurchlässige und nicht durchlässige Teilbereiche unterteilt, wobei wenigstens die luftdurchlässigen Bereiche mit einem Absorber versehen werden, bevor dieser zu einem Laminat verbunden wird. Mindestens eine Schicht eines mehrlagigen Flächengebildes kann in Teilbereichen, wenigstens mit einem Absorber, zusätzlich aber mit einem Trägermaterial und Abstandshalter versehen werden. Derartige Schichten können aus Mikrofasern oder Membranmaterialien bestehen, welche über die gesamte Fläche wasserdicht aber Wasserdampf durchlässig sind. Entsprechende Schichten können durch einander zugewandte Verbindungsmöglichkeiten miteinander verbunden werden, wobei an den Absorber angrenzende Teilbereiche freigelassen werden. Durch zugewandte Verbindungsmöglichkeiten werden die Schichten unverlierbar miteinander verbunden. Eine Verbindungsmöglichkeit kann sich auch nur auf einer der Flächen befinden. Die Teilbereiche des Laminates, welche sich angrenzend (wenigstens in unmittelbarer Nähe) an den Absorber befinden können nachtäglich luftdurchlässig gemacht werden. z. B. durch Perforationen.

Befinden sich die Verbindungsmöglichkeiten innerhalb eines Laminates, hat dies den Vorteil, das erfindungsgemäße mehrlagige Flächengebilde sich optisch nicht von anderen, nicht erfindungsgemäßen Flächen unterscheiden. Selbstverschließende erfindungsgemäße luftdurchlässige Teilbereiche lassen sich so unauffällig mit funktionslosen Flächen kombinieren.

In einer weiteren Ausführungsform sind die luftdurchlässigen Schichten so miteinander verbunden, dass sie verbundene Hohlkörper mit einem vorzugsweise runden Querschnitt bilden. Beispielsweise können die Hohlkörper als Schläuche ausgebildet sein, welche über Mikroöffnungen verfügen oder durch Hohlräume gebildet werden, die in den luftdurchlässigen Bereichen einer Fläche angeordnet sind. Sind die Hohlkörper als Schläuche ausgebildet, befindet sich der Absorber im Kern des Schlauches, die einzelnen Schlauchhohlkörper können durch Verbindungen zu einem Flächengebildet miteinander verbunden werden, das das Kernelement des erfindungsgemäßen Belüftungseinsatzes bildet. Grundsätzlich können die Hohlkörper bereits beim Herstellen mit dem Absorber befüllt werden oder nachträglich befüllt werden, z.B. durch Einspritzen eines Gels, welches nach Trocknung ein Pulver oder Granulat bildet. In der Ausführungsform mit Hohlräumen bzw. Hohlkörpern sind jeweils Teilbereiche des entstehenden Flächengebildes wasserdurchlässig und atmungsaktiv, während die Bereiche zwischen den Hohlkörpern vorzugsweise durch nicht wasserdurchlässige Flächen, die ggf. wasserdampfdurchlässig sind, gebildet werden. Die Wasser- und Luftdurchlässigkeit im Bereich der mit Absorber gefüllten Bereiche kann ggf. durch ein nachträgliches Einbringen von Öffnungen, wie Perforationen, erfolgen.

In einer weiteren Ausführungsform verfügt die erste luftdurchlässige Fläche über eine Vielzahl von Einwölbungen, die mit dem Absorber und ggf. Füllmaterial befüllt sind. Die Einwölbungen werden durch die zweite luftdurchlässige Fläche als Abdeckung verschlossen. Bevorzugt wird die zweite luftdurchlässige Fläche durch thermoplastisches Verschweißen oder durch Klebstoff an der ersten luftdurchlässigen Fläche befestigt. Vorzugsweise sind die Bereich zwischen den einzelnen Kammern, die durch die Einwölbung ausgebildet werden, wasserdicht, wobei diese Eigenschaft entweder durch die Auswahl des entsprechenden Materials oder durch die Art der Verbindung der luftdurchlässigen Fläche bzw. die Art der Abdeckung oder Trägerschicht erreicht wird. Bevorzugt befinden sich Lüftungsflächen somit nur innerhalb der Einwölbung oder auf Höhe der Abdeckung der Einwölbungen. Die Einwölbungen werden beispielsweise durch Prägen und gleichzeitiges Stanzen des Materials hergestellt, wobei ggf. während dieses Prägevorgangs wasserdurchlässige Flächen gebildet werden, indem die Bereich der Einwölbungen mit Perforationen versehen werden, z.B. durch entsprechende Prägewerkzeuge. Alternativ kann durch das Prägen die zuvor wasserdurchlässige Fläche, z.B. durch Druck, Hitze oder Aufbringung zusätzlicher Materialien verschlossen werden. Weiterhin kann die Wasserundurchlässigkeit auch durch Aufbringen eines weiteren Materials erzielt werden, z.B. durch Überspritzen mit einem wasserundurchlässigen Kunststoff. Dieses ist bevorzugt der die Trägerschicht ausbildende Kunststoff, die auch die oben beschriebenen zusätzlichen Elemente aufweisen kann. Die Einwölbungen können unterschiedliche Formen, Größen und Strukturen aufweisen, sowohl hinsichtlich ihrer Innen- als auch ihrer Außenflächen. Die Einwölbung und deren Abdeckung bzw. die hierüber angeordnete Trägerschicht weisen ggf. zudem Strukturen oder Wölbungen auf. Bevorzugt ist der Absorber an den Seitenwänden der Einwölbungen angeordnet.

Vorteilhafterweise weisen die Abdeckungen auf Höhe der Einwölbungen Materialvorsprünge auf, welche in die Einwölbung hineinragen. Die Vorsprünge dienen als Abstandshalter gegen ein zu starkes Zusammenpressen der Kammern und erhöhen somit die mechanische Stabilität der Kammern. Wenn die Materialvorsprünge so angeordnet sind, dass sie in den Absorber hineinragen, entziehen sie aufgrund ihrer Kapillarwirkung dem Absorber Wasser und leiten dieses an die Oberfläche der Abdeckungen, wo es verdunstet. Hierdurch trocknet der Absorber schneller und der Schichtaufbau wird schneller wieder luftdurchlässig.

Die Abdeckungen sind ggf. so ausgebildet, dass sie Auswölbungen ausbilden, die bevorzugt über den Einwölbungen angeordnet sind, so dass Auswölbung und Einwölbung Kugeln bilden oder die Wölbung der beiden Flächen ineinander greifen. In einer weiteren Ausführungsform ist innerhalb der Einwölbungen ein separates Bauteil angeordnet, welches ebenfalls aus einer luftdurchlässigen Schicht besteht und in dessen Kern ein Absorber angeordnet ist. Dieses separate Bauteil ist bevorzugt mit der luftdurchlässigen Fläche bzw. der Abdeckung des erfindungsgemäßen Bauteils so verbunden, dass die Luftdurchlässigkeit nur im Bereich der separaten Bauteile gegeben ist. Die separaten Bauteile sind Hohlkörper, welche mit dem Absorber befüllt sind. Die Quellung des Absorbers wird durch die Form der Hohlkörper, die bevorzugt einen runden Querschnitt aufweisen, das Material und das Volumen des Hohlraums begrenzt. In einer weiteren Ausführungsform weist der erfindungsgemäße Belüftungseinsatz zusätzliche Transportelemente auf, die mit der luftdurchlässigen Schicht und/oder der Absorberschicht in Berührung stehen und vorzugsweise fadenförmig, streifenförmig oder noppenförmig ausgebildet sind. Diese Transportelemente bilden eine Feuchtigkeitsbrücke und transportieren durch ihren Kapillareffekt das Wasser aus dem Absorber an die Oberfläche und vergrößern so die Verdunstungsfläche. Der Absorber ist schneller wieder trocken und der erfindungsgemäße Aufbau wird früher wieder luftdurchlässig. Wenn die fadenförmigen Verdunstungsflächen gleichmäßig auf der gesamten Oberfläche des erfindungsgemäßen Belüftungseinsatzes angeordnet werden, sowohl auf den nicht wasserdurchlässigen, als auch auf den absorberhaltigen Flächenteilen, verfügt die Fläche über eine gleichmäßige Stapellänge. Nach der Quellung des Absorbers ragen die Verdunstungsflächen, welche sich bevorzugt auf den Bereichen des Absorbers befinden, über die anderen bereich hinaus, was sowohl einen optischen Effekt ermöglicht, als auch eine durch das Herausragen der Transportelemente bedingte schnellere Trocknung.

In der Ausführungsform des erfindungsgemäßen Belüftungseinsatzes als Flächengebilde oder integriertes Belüftungselement (Grundform 2) besteht dieser nur aus einem Trägermaterial und einer Absorberschicht, wobei die Absorberschicht nach außen vollständig vom Trägermaterial, das teilweise perforiert oder luftdurchlässig ausgestaltet ist, umschlossen ist oder zumindest in mehreren Raumrichtungen den Absorber umschließt. Bevorzugt ist dieser Belüftungseinsatz als mit einem Absorber versehenes Abstandsgewirk ausgestaltet.

In beiden Grundformen kann der Absorber als Plattenware ausgebildet sein, die je nach Anwendung zugeschnitten wird. Die nach dem Schneiden offenen Ränder, aus denen Absorber austreten könnten, werden vor dem Einsatz verschlossen, beispielsweise durch Nähte, um Ketteln oder Auftragen eines zum Zeitpunkt der Verarbeitung fließfähigen Materials. Alternativ können die Zuschnitte passgenau in die zu verschließende Öffnung eingesetzt werden. Durch das bündige Anliegen an den angrenzenden Flächen ebenfalls das Herausquellen des Absorbers in den Randgebieten verhindert.

Bei der Ausgestaltung des Belüftungseinsatzes als Flächengebilde (Grundform 2) kann der Absorber umsponnen, umwoben oder mit einem non-woven oder einer luftdurchlässigen Schicht umschlossen sein.Der Absorber ist beispielsweise in der Fläche in linsenförmigen, partikelförmigen oder streifenförmigen Bereichen angeordnet, die den Absorber einschließen.

Wenn der erfindungsgemäße Belüftungseinsatz als integriertes Belüftungselement (Grundform 2) ausgebildet ist, wird die Trägerschicht bevorzugt durch ein nicht luftdurchlässiges Material, das teilweise perforiert ist oder durch Bestandteile des zu belüftenden Objekts selbst ausgebildet. So kann beispielsweise beim Einsatz in der Sohle eines Schuhs die Trägerschicht durch die Seitenwände eines Belüftungskanals gebildet sein, die den Absorber in seiner Ausdehnung in fast alle Raumrichtungen begrenzen. Ähnlich funktioniert das erfindungsgemäße Belüftungselement beispielweise wenn es im Hausbau zwischen zwei oder mehrere Rippen oder Platten eingebracht wird, die dann die Trägerschicht darstellen. Bevorzugt ist das erfindungsgemäße Belüftungseinsatz, wenn es als integriertes Belüftungselement ausgestaltet ist, schlauchförmig oder hülsenförmig und mit ggf. einem fadenförmigen Absorber versehen.

Das Kernelement des Einzelelements bzw. das Flächengebilde ist in einer Ausführungsform so ausgestaltet, dass der Absorber in einem Klebstoff bzw. in einer Lösung gebunden ist, diese ggf. im Druckverfahren auftragbar sind. Dieses ermöglicht ein aufdrucken von quellbaren Flächen, welche mit einer auf der Höhe des Absorber-Aufdrucks mit Perforationen versehenden Schicht abgedeckt und verbunden werden, wodurch das textile Flächengebilde bzw. das Kernelement entsteht. In einer weiteren Variante können die luftdurchlässigen Materialen mit einer haftenden Substanz bedruckt werden, auf die der Absorber auf einen weiteren Schritt aufgetragen wird. Die so mit Absorber versehenen Flächen werden nachträglich auf Höhe der Absorberplatzierung perforiert. In allen Ausführungsformen können die luft-durchlässigen Schichten als zusätzliches optionales Merkmal über Wölbungen verfügen, welche eine Luftzirkulation positiv beeinflussen.

Überraschenderweise ist durch die erfindungsgemäßen Belüftungseinsätze eine gute Luftzirkulation innerhalb des zu belüftenden Objektes und insbesondere ein Luftaustausch aus dem Inneren des zu belüftenden Objektes mit der Umgebungsluft möglich, wobei sich der Belüftungseinsatz innerhalb kürzester Zeit bei Kontakt mit Wasser selbsttätig verschließt. Sobald die Wasserbelastung nachlässt und die Feuchtigkeit verdunstet, öffnet sich der Belüftungseinsatz wieder, ohne dass es hierfür notwendig ist, dass der Benutzer die Belüftungsöffnungen durch mechanische Abdeckungen öffnet oder verschließt. Es hat sich gezeigt, dass ein weiterer Vorteil des erfindungsgemäßen Belüftungseinsatzes ist, dass dieser sich selbstständig repariert. Während andere wasserabweisende und luftdurchlässige Membrane beispielsweise durch Bohren oder Stechen beschädigt werden, ist dieses bei den erfindungsgemäßen Belüftungseinsätzen nicht der Fall. Wird z.B. eine Nadel oder ein Nagel durch die Schichten des Einsatzes gebohrt und wieder entfernt, so verschließt sich das Loch durch die Quellung des Absorbers und der Benutzer bzw. das Objektinnere ist weiterhin effektiv gegen Nässe geschützt.

Die erfindungsgemäßen Belüftungseinsätze sind besonders effektiv, wenn der Absorber bereits zwei bis dreimal durch Nässe aktiviert worden ist. Es konnte beobachtet werden, dass die maximale Luftdurchlässigkeit und die Funktionsfähigkeit erhöht worden sind, wenn der Belüftungseinsatz in seiner Ausbildung als reversibler Belüftungseinsatz "voraktiviert" worden ist.

Durch den Aufbau mit einer Trägerschicht und besonders durch einen Aufbau mit dem Schutzgitter sind die Belüftungseinsätze zudem gegen mechanische Beschädigungen geschützt und vielseitig auch in Bereichen mit einer hohen Beanspruchung einsetzbar. Vorteilhafterweise nimmt der erfindungsgemäße Belüftungseinsatz bei der Quellung des Absorbers nur geringfügig an Stärke zu. Hierdurch bedingt beeinflusst das Gewicht des Belüftungseinsatzes nicht den Tragekomfort und es ist eine schnellere Trocknung durch ein geringeres Volumen gewährleistet. Durch den Aufbau des erfindungsgemäßen Belüftungseinsatzes wird verhindert, dass es durch eine Quellung des Absorbers zu einem unkontrollierten Aufquellen oder "auseinander reißen" der Schichten kommt. Durch den Absorber in dem erfindungsgemäßen Belüftungseinsatz wird zudem Feuchtigkeit aus dem Inneren eines Bekleidungsstückes, Schuhs oder Gegenstands nach außen transportiert. Bei einer geringen Feuchtigkeitsmenge quillt der Absorber nur geringfügig auf und leitet so die Feuchtigkeit an die Außenseite, sofern die Umgebungsluft keine hohe Luftfeuchtigkeit zeigt. Dieses funktioniert auch im geschlossenen Zustand des Belüftungseinsatzes, da Feuchtigkeit an der Oberfläche verdunstet und hierbei Feuchtigkeit aus dem Inneren nach außen zieht. Sowohl im geöffneten als auch im geschlossenen Zustand des Belüftungseinsatzes erfolgt somit ein Feuchtigkeitstransport von innen nach außen, wodurch die Luftqualität im Inneren des zu belüftenden Objekts verbessert wird.

Die durch z.B. die Trägerschichten gebildete Distanzfläche verhindert außerdem, dass Feuchtigkeit an Bereiche abgegeben wird, in denen dieses unerwünscht ist, wie z.B. darunterliegende Kleidung. Durch die gezielte Platzierung des Absorbers in den Kammern kann zudem verhindert werden, dass der Absorber zu viel Feuchtigkeit aufsaugt, die durch eine Gewichtsbeeinträchtigung entsteht. Zusätzlich sichert der Aufbau des erfindungsgemäßen Belüftungseinsatzes, dass kein Absorber aus dem Belüftungseinsatz herausquillt. Der Belüftungseinsatz weist hierfür ggf. eine luftdurchlässige Schicht auf, die so feinporig ist, dass der Absorber auch unter Druck nicht herausquellen kann.

Um die Bildung einer Feuchtigkeitsbrücke zum umliegenden Material bzw. zum Träger der entsprechenden Gegenstände zu verhindern, wird bevorzugt auf der Körper zugewandten Seite ein nicht wasserleitendes Material eingesetzt oder das Material entsprechend ausgerüstet. Die Bildung einer Feuchtigkeitsbrücke wird ggf. zusätzlich durch die Kunststoffanteile, wie Trägerschichten, Schutzgitter und Distanzflächen ermöglicht. Das Verhindern eines direkten Körperkontaktes mit entsprechenden Flächen hat nicht nur den Vorteil, dass eine Luftschicht ausgebildet wird, sondern zudem auch, das Kälte bzw. Temperaturunterschiede von außen nicht direkt durch das feuchte Material des Absorbers oder andere Bestandteile des Belüftungseinsatzes an den Träger weitergeleitet werden. Die körperzugewandten Strukturen haben den Vorteil, dass zum einen ein Luftstrom an der Körperseite zirkulieren kann und zum anderen beim starken Schwitzen der taktile Kontakt durch Wassertropfen, wie z.B. Schweiß, den erfindungsgemäßen Belüftungseinsatz nicht dazu veranlasst, sich durch eine Quellung vorzeitig zu verschließen und so die Belüftung zu unterbrechen. Für die dem Körper zugewandten Materialien werden beispielsweise hautfreundliche aber nicht wasserleitende Materialien eingesetzt. Solche Materialien sind beispielsweise Mikrofasern bzw. Membranen, welche in Teilbereichen, in denen sich der Absorber befindet, über luftdurchlässige Öffnungen verfügen und so die luftdurchlässige Schicht bilden. Durch den Einsatz solcher Materialien kann der Vorteil der Wasserdampfdurchlässigkeit dieser Materialien mit der verbesserten Luftdurchlässigkeit der erfindungsgemäßen Belüftungseinsätze verbunden werden.

Der erfindungsgemäße Belüftungseinsatz, sowohl als Einzelelement als auch als Flächengebilde oder Belüftungselement kann in verschiedensten Anwendungsbereichen eingesetzt werden. Eine Verwendung des erfindungsgemäßen Belüftungseinsatzes ist vorgesehen zur Belüftung von Schlafsäcken, Zelten, Rucksäcken oder Taschen, Helmen, Protektoren, Jacken, Pferdesättel, Gärungsverschlüsse, Schutzanzügen, Schutzhelmen, Motorradbekleidung Schutzbrillen oder Brillen, medizinisch oder orthopädischen Verbänden, orthopädischen oder medizinischen Schienen, Prothesen, Orthesen, Schuhen, Handschuhen, Textilien, Abdeckungen oder Decken. Zudem kann der erfindungsgemäße Belüftungseinsatz verwendet werden in Verpackungen, elektronischen Geräten, Trockensilos, Fensterrahmen, Dachbedeckungen oder deren Bestandteile.

Wird der erfindungsgemäße Belüftungseinsatz in Schuhen verwendet, sind verschiedene Positionierungen im Schuh denkbar. Beispielsweise kann der Belüftungseinsatz in einer Innensohle mit integrierter Belüftungsfläche eingesetzt werden und über den Lüftungslöchern und/oder ggf. in den Lüftungsöffnungen in der Sohle positioniert sein. Der erfindungsgemäße Belüftungseinsatz dient dann als Dichtungsvorrichtung und verhindert das Eintreten von Wasser. Der Belüftungseinsatz in den Schuhsohle aus Kunststoff oder Leder oder anderen üblichen Sohlenmaterialien funktioniert dann nach Art eines Korkens. Bevorzugt weist der erfindungsgemäße Belüftungseinsatz für diese Verwendung oberhalb der Trägerschicht ein zusätzliches Deckelement auf, das ein Eintreten von Schmutz oder ein Verlieren des Absorbers verhindert.

Bei allen Verwendungsmöglichkeiten ist der Absorber entweder als separates Bauteil ausgestaltet, das ggf. austauschbar ist oder fester Bestandteil des zu belüftenden Objekts. Dabei ist der Absorber sichtbar oder nicht sichtbar im zu belüftenden Objekt angeordnet. Beispielsweise bei der Verwendung zur Belüftung von Bekleidung oder Schuhen kann der erfindungsgemäße Belüftungseinsatz aus optischen Gründen mit einem luftdurchlässigen Material oder einem Material mit Öffnungen verdeckt sein.

Der erfindungsgemäße Belüftungseinsatz ist in einer Ausführungsform Licht reflektierend ausgestaltet. Zudem können Kunststoffe/ Materialien gewählt werden, welche bei Dunkelheit Leuchten (phosphorisieren oder fluorisieren) oder durch eine elektrische Spannung leuchten.

Der erfindungsgemäße Belüftungseinsatz ist bevorzugt waschbar oder in einer chemischen Reinigung zu säubern.

Bei der Auswahl der Materialen zur Herstellung des erfindungsgemäßen Belüftungseinsatzes werden diese bevorzugt an den Verwendungszweck des Objekt angepasst. So werden für Schutz- Handschuhe, Anzüge, Helme und Schuhe. z.B. Materialen verwendet welche die Verletzungsgefahren minimieren, wie etwa besonders stabile Mesh's oder mehrere Lagen luftdurchlässiger Materialien oder stabile Schutzgitter oder Abdeckungen. Auch Nanomaterialien, welche schmutz- und wasserabweisende Eigenschaften besitzen, können für Teile des erfindungsgemäßen Belüftungseinsatzes verwendet werden. Dieses verlängert die Atmungsaktivität und der Zeitpunkt eines Verschließens durch Wasser oder Schmutz wird verzögert. In einer Ausführungsform, in der erfindungsgemäße Belüftungseinsatz in einem Schuh eingesetzt wird, wird der Belüftungseinsatz während der Schuhherstellung in die Schuhsohle integriert. Vorzugsweise wird dabei ein Bauteil aus mindestens zwei, vorzugsweise drei, Absorbern verwendet, die miteinander verbunden sind, so dass ein Belüftungseinsatz in der Sohle zu liegen und die beiden anderen z.B. kreisförmig mit diesen verbundenen Belüftungseinsätze jeweils beide auf der Oberseite des Schuhs angeordnet sind.

Die Verwendung des erfindungsgemäßen Belüftungseinsatzes soll anhand der nachfolgenden Ausführungsbeispiele weiter erläutert werden:
Einige Anwendungen sind im Folgenden beispielhaft etwas ausführlicher erläutert:
   - Beim Einsatz in einer Oberfläche kann der Belüftungseinsatz beispielsweise Teil eines Schienenbeinschützers oder Schutzhelms sein.
   - Der Belüftungseinsatz kann zur Belüftung von militärischen Schutzeinrichtungen, wie Schutzanzügen, verwendet werden. Beispielsweise bei Schutzanzügen von Jetpiloten, die unter Überdruck stehen, verhindert der Belüftungseinsatz das Eindringen von Wasser, sofern der Pilot im Schleudersitz aus dem Flugzeug aussteigen musste.
   - Beim Einsatz in der Medizintechnik kann der Belüftungseinsatz in Schienen, wie sie nach Knochenbrüchen angelegt werden, bzw. in schützenden Abdeckungen nach Verletzungen eingesetzt werden. Durch die verbesserte Luftzirkulation wird der Heilungsprozess beschleunigt und sorgt zudem für einen erhöhten Tragekomfort. Bei der Anwendung ist dabei sowohl in der Veterinärmedizin als auch in der Humanmedizin möglich. In dieser Ausführungsform kann der Belüftungseinsatz zudem mit einem Farbstoff versehen sein, welcher visualisiert, wie lange die Schiene getragen werden muss. Zudem können auch hydrochrome Farbstoffe eingesetzt werden, die anzeigen, wenn der Verband bzw. die Schiene mit Wasser in Berührung gekommen ist und deshalb ggf. ausgetauscht werden muss.
   - Der Belüftungseinsatz kann auch in Möbelflächen eingesetzt werden, z.B. in den Liege- oder Sitzflächen von Kinderwagen, Kindertragen oder Babyautositzen. Hierdurch ist eine Belüftung bei gleichzeitigem Schutz vor Nässe bzw. Feuchtigkeit möglich. Der erfindungsgemäße Belüftungseinsatz kann in der Bauindustrie eingesetzt werden, z.B. zur Belüftung von Gebäuden, bei gut schließenden Fenstern oder starker Isolation.
   - Weitere Einsatzmöglichkeiten des erfindungsgemäßen Belüftungseinsatzes umfassen Abdeckungen, Kunststoffplanen und Gehäuse, wie Kabelbäume, Sicherungskästen, Scheinwerferboxen, bei denen durch den Belüftungseinsatz die Ansammlung von Kondenswasser vermieden werden kann. Diese Vermeidung von Kondenswasser ist auch denkbar beim Einsatz des erfindungsgemäßen Belüftungseinsatzes in Geräten, PKW, Motorrädern, Wohnwagen, Plakathalterungen, Zelten, Schlafsäcken, Schaukästen oder Gewächshäusern.
   - Belüftungseinsatz kann auch zur Belüftung von Spezialbehältern genutzt werden, die zur Aufbewahrung von feuchtigkeits- oder flüssigkeitsempfindlichen Stoffen, wie Baustoffen (Zement, Kleber), Futtermitteln, Lebensmitteln oder medizinischen Produkten dienen.
   - Der Belüftungseinsatz kann neben dem Absorber Wirkstoffe enthalten und dadurch als Spezialfilter ausgestaltet sein, beispielsweise bei einer Anwendung im Schutzhelm, Staubsauger oder Staubmaske. Wir der Absorber im Belüftungseinsatz mit Aktivkohle kombiniert, so wirkt die Aktivkohle gegen Gerüche, während der Belüftungseinsatz gleichzeitig das Auftreffen von Flüssigkeiten auf die Elektronik verhindert.
   - Der Belüftungseinsatz kann so in einem Bekleidungsstück, einer Fläche oder einem Gegenstand angeordnet sein, dass es als Spezialventil dient und als Notwassersperrschicht oder Flüssigkeitssperre. Der Belüftungseinsatz kann dabei mit elektronischen Sensoren gekoppelt werden, die z.B. den elektronischen Artikel abschalten bzw. eine bestimmte Steuerung herbeiführen, wenn der Belüftungseinsatz mit Wasser oder Flüssigkeiten in Kontakt kommt.
   - Der Belüftungseinsatz kann so ausgestaltet sein, dass er als Stromgeber funktioniert: in dieser Ausführungsform ist eine Abdeckungsschicht aus Kupfer und die gegenüberliegende Abdeckungsschicht aus einem anderen Material z.B. Zink. Wenn der zwischen den Abdeckungsschichten liegende Absorber nass wird, entsteht ein elektrischer Strom, der z.B. für ein Signalgeber, wie eine Leuchtdiode oder andere elektronische Artikel verwendet werden kann oder eine Schaltung auslöst. Dieses macht es beispielsweise beim Einsatz in Kinderbekleidung oder Kinderschuhen möglich, dass diese, wenn sie nass wird, blinkt oder Töne von sich gibt. Dabei können die einzelnen Kammern des Belüftungseinsatzes wie Batterien hintereinander geschaltet werden.
   - Zur Vorführung des erfindungsgemäßen Lüftungseinsatzes kann dieser in einem Testgerät integriert sein. Das Testgerät besteht z.B. aus einen zu einer Seite geöffneten Hohlkörper in den der erfindungsgemäße Belüftungseinsatz eingesetzt ist. Im geöffneten Zustand ist es möglich durch den Belüftungseinsatz, vergleichbar mit einer Trillerpfeife Luft hindurch zu blasen. Wird der Belüftungseinsatz angefeuchtet, verschließt sich dieser, was sich im Testgerät dadurch auswirkt, dass keine Luft mehr hindurch geblasen werden kann.

Der erfindungsgemäße Belüftungseinsatz wird in einem Ausführungsbeispiel durch das Material des Bekleidungsstücks oder Schuhs selbst gebildet. So könnten beispielsweise entsprechende Hohlräume bzw. Löcher in der Sohle eines Schuhs angeordnet sein, in der Absorber platziert ist. Dieses setzt voraus:
- *Die Verwendung einer flachen Schicht eines Absorber.*
- *Wasserdampfdurchlässige Seitenwände.*
- *Verdunstungsflächen, welche mit dem Absorber oder dessen Trägermaterial in Verbindung stehen. Z. B. das Trägermaterial ist Feuchtigkeit leitend und ggf. nur in Teilbereichen mit einem Absorber versehen.Die Verdunstungsflächen können sowohl in das Schuhinnere, als auch aus dem Schuh heraus ragen.*

Der erfindungsgemäße Belüftungseinsatz kann auch als Hülsenelement ausgestaltet sein. In diesem Fall umgibt eine röhrenförmige Trägerschicht das Kernelement bzw. den Absorber. Quillt der Absorber auf, so verschließt er wie ein Korken das röhrenförmige Element. Der Absorber kann für den Einsatz für das Hülsenelement beispielsweise als Absorberfleece vorliegen oder als fadenförmiger Träger, der mit Absorber beschichtet ist.

Beim weiteren Ausführungsbeispiel dient der Absorber zur Bildung einer atmungsaktiven Innensohle. Die Innensohle verfügt an Ihrer Unterseite über mit Absorber versehene z.B. hohle Auswölbung. Das Material der Auswölbung stellt somit die Trägerschicht des erfindungsgemäßen Belüftungseinsatzes dar. Die Auswölbungen weisen Materialdurchbrüche auf, welche Luftverbindungen zwischen dem Schuhinnenraum und den Öffnungen der Schuhsohle herstellen. Die Schuhsohle weist an ihrer Außenseite ebenfalls Öffnungen auf, die mit den Auswölbungen verbunden sind. Bei Kontakt mit Wasser verdichtet sich der in den Auswölbungen enthaltene Absorber und die Öffnungen und die Materialdurchbrüche der Auswölbungen verschließen sind. Die beispielsgemäße Innensohle kann auch so ausgebildet sein, dass sie keine Materialdurchbrüche aufweist, wenn die Auswölbungen oder Öffnungen der Schuhsohle so angeordnet oder ausgebildet sind, dass bei nicht gequollenem Absorber eine Luftzirkulation durch die Öffnungen der Schuhsohlen möglich ist. Die Auswölbungen können auch über Luftöffnungen, z.B. in Form eines senkrechten Hülsenelementes mit den Öffnungen der Schuhsohle verbunden sein. Die Auswölbungen können auch selbst hülsenartig ausgestaltet sein und über den Öffnungen der Schuhsohle angeordnet und mit Absorber befüllt sein. Bei einer Quellung des Absorbers verformen sich die Strukturen der Auswölbung dann derart, dass diese wasserdicht zusammengepresst werden.

Ein weiteres Ausführungsbeispiel stellen Schuhe oder Schuhsohlen dar, die Luftführungskanäle aufweisen. In den Luftführungskanälen kann ebenfalls ein Absorber angeordnet sein, der einen Wassereintritt verhindert. Ist der Luftführungskanal mit Öffnungen in der Schuhsohle verbunden, so wird hierdurch ebenfalls eine Belüftung ermöglicht, der Wassereintritt durch den Absorber aber verhindert, der Absorber ist somit bevorzugt als integriertes Belüftungselement ausgebildet.

Bei den beiden oben beschriebenen Beispielen für den einsatz in Schuhen wird eintretendes Wasser aufgesogen und durch die Quellung des Absorbers die Luftführungskanäle verschlossen, bevor das Wasser den Schuhinnenraum und somit den Fuß erreicht. Gleichzeitig wird der Tragekomfort des Schuhs verbessert, da der in der Innensohle bzw. im Luftführungskanal angeordnete Absorber dem Schuhinnenraum Luftfeuchtigkeit entzieht.

Die beispielhaft beschriebenen Innensohlen sind entweder fest eingeklebt, um zu verhindern, dass an den Seitenrändern bzw. an den Flächen, die nicht vom Absorber abgedichtet werden, Wasser eintritt oder sie verfügen über Verbindungsflächen, welche abdichten.

Die in den Ausführungsbeispielen beschriebenen Luftführungskanäle können auch in anderen Anwendungsbereichen, etwa bei Schutzhelmen oder Elektrogeräten eingesetzt werden und durch einen erfindungsgemäßen Belüftungseinsatz verschlossen werden.

In einer Ausführungsform der Grundform 2 ist das erfindungsgemäße Belüftungselement fadenförmig ausgestaltet d.h. eine luftdurchlässige Schicht ist beispielsweise als Hülse oder als Schlauch ausgebildet und mit einem Absorber ggf. zusammen mit einem Trägermaterial gefüllt. Der Absorber mit Trägermaterial kann auch beispielsweise Absorberfleece sein. Wird dieser erfindungsgemäße Belüftungseinsatz in Fadenform, wobei der Faden als kleinste Form der Fläche verstanden wird, verwendet, so wird er als Faden vernäht oder in Öffnungen eingebracht. Durch die Öffnungen kann bei Trockenheit entsprechend Luft zirkulieren. Quillt der "Faden" bei Nässe auf, so verschließen sich die Öffnungen.

Das Material des Absorbers, dass des Füllmaterials ist in einer weiteren Ausführungsform magnetisch bzw. reaktiv auf ein Energiefeld. Dieses wird durch entsprechende Materialien bzw. Beimischungen und Verbindungen erreicht. Hierdurch lässt sich die Ausrichtung oder Anordnung des Absorbers und/oder Füllmaterials beeinflussen. Befinden sich das Füllmaterial/der Absorber in einem senkrechten Hohlraum wie z.B. Löcher einer Schuhsohle, würden diese sich diese Materialien im trockenen Zustand auf der untenliegenden Abdeckung befinden. Eine Luftzirkulation wäre schon durch das "Granulat" behindert. Wenn ein Teil der Seitenwände des Hohlraumes magnetisch oder umgekehrt das Granulat ist, sammeln sich diese Granulatteile an den Seitenwänden und eine Luftzirkulation durch den Hohlraum ist freigegeben.

Dieser Effekt kann durch ein dauerhaftes Energiefeld erzeugt werden, oder gezielt durch das Anlegen/ Freischalten einer Spannung erfolgen. Des Weiteren kann ein Energiefeld in den Wirkungsbereich gebracht werden, z. B. durch einen mechanischen Schieber, welcher Bestandteil des Objektes, z.B. des Schuhs ist. Ein Magnet könnte z.B. durch eine einstellbare Mechanik bzw. Schiebevorrichtung ausgerichtet werden, sowohl durch den Nutzer als auch durch eine elektronische Vorrichtung.

Die Materialien und Eigenschaften des erfindungsgemäßen Belüftungseinsatzes werden den Anwendungsbereichen angepasst bzw. entsprechend gewählt. So ist es u.a. möglich das der Vernetzungsgrad eines Absorbers, wie etwa der einer Polyacrylsäure für den Einsatzbereich innerhalb von Kleidungsstücken ein anderer ist, als der innerhalb von Arbeitsschuhen, wo der Träger mit einer Vielzahl von chemischen Substanzen und Umwelteinflüssen ausgesetzt ist. Zudem kann das Material bzw. die Materialien an die entsprechenden Anwendungsbereiche angepasst werden und innerhalb eines Belüftungseinsatzes in Teilbereichen anders sein. Als Belüftungseinsatz für Schienen, welche bei Knochenbrüchen/ oder als Schutz bei Verletzungen (Pflaster, Wundverbände) genutzt werden, ist es hilfreich wenn entsprechende Einsatze für die Behandlung von Brüchen, wenig bis gar nicht nachgiebig sind, und an ihrer Unterseite dem Körper zugewandt über Haut bzw. Hautklima freundliche Materialien und/oder Wirkstoffe verfügen. Flächen hingegen, welche für den Einsatz an Schutzhelmen bestimmt sind, können über andere Materialeigenschaften verfügen, als Flächen deren Einsatzgebiete Zelte oder Bekleidungstücke sind.

Wird der erfindungsgemäße Belüftungseinsatz in einem Bereich eingesetzt, in dem er einer großen mechanischen Belastung beispielsweise einer Druckbelastung ausgesetzt ist, so kann der Belüftungseinsatz zusätzlich Schutzgitter enthalten, die ein Zusammenpressen der absorberhaltigen Bereiche verhindern und eine Druckverteilung gewährleisten, die die absorberhaltigen Flächen schützt. Vorteilhafterweise ist der Belüftungseinsatz in Bereichen mit starken mechanischen Einflüssen so ausgeführt, dass die absorberhaltigen Flächen nicht belastet werden. Dieses ist beispielweise möglich indem die Trägerschicht zwischen den absorberhaltigen Bereichen als Scharnier oder elastisch, flexibel ausgebildet ist.

Im Nachfolgenden wird das erfindungsgemäße Verfahren näher erläutert.

Bevorzugt wird vor Ablauf von Schritt B. ein weiterer Verfahrensschritt A. ausgeführt, unter A Anordnen einer Kernelementschicht auf einer Abdeckungsschicht und Anordnen einer zweiten Abdeckungsschicht auf der Kemelementschicht.

Bevorzugt kann in Verfahrensschritt B. eine Meterware eingesetzt werden, die aus luftdurchlässigen Schichten, die mit Absorbern versehen sind, besteht. Bevorzugt weist diese Meterware Halter auf, welche die einzelnen Schichten fest miteinander verbinden.

Die in Schritt B. ausgestanzten Formen weisen offene Seiten auf. In einer Ausführungsform werden die offenen Seiten des Grundelementes durch thermoplastisches Verschweißen und Kleben verschlossen. Das Verschließen der offenen Seiten erfolgt in einer weiteren Ausführungsform durch die Trägerschicht oder die Verbindungsflächen und/oder durch den Kunststoff beim Spritzgießen. In einer weiteren Ausführungsform werden die offenen Seiten des Grundelements durch thermoplastisches Verschweißen oder durch Ultaschallschweißen beim Ausstanzen gemäß Schritt B., beispielsweise durch ein erhitztes Stanzwerkzeug abgedichtet. Wenn Schritt B. durch Informschneiden mit einem Laser erfolgt, verschmelzen die Ränder miteinander und das Grundelement wird hierdurch ebenfalls abgedichtet. Weniger bevorzugt ist es, die offenen Seiten durch ein zusätzliches Teil, etwa einen Rahmen oder Nähte abzudichten. Das Ausstanzen erfolgt beispielsweise mit Cuttern oder herkömmlichen Stanzwerkzeugen.

Bevorzugt werden zumindest die Absorberschicht und ggf. die luftdurchlässigen Schichten und die Abdeckungen beim Ausstanzen in Schritt B. mit Durchflussöffnungen und/oder Haltevorrichtungen versehen. Die Haltevorrichtungen werden vorzugsweise dafür genutzt, das Grundelement im Schritt C. in der Spritzgussform zu positionieren. Häufig werden Gegenstände hergestellt, die mehrere Teile aufweisen. Unterschiedliche Farben, Härtegrade und ggf. Kunststoffe oder deren Mischungen können bei dem erfindungsgemäßen Verfahren in einer einzigen Maschine aufgespritzt werden, hierfür werden sogenannte Schiebewerkzeuge benutzt. Vorteilhafterweise sind die luftdurchlässigen Flächen gewölbt und das Spitzgusswerkzeug so ausgeformt, dass diese Wölbungen zwecks Vermeidung eines Zusammenpressens der Flächen mitberücksichtigt werden. Wenn die luftdurchlässigen Flächen in den Bereichen, in denen der Absorber positioniert ist, beim Zusammenfahren des Spitzgusswerkzeuges zu stark gepresst und komprimiert würden, würde dieses die spätere Luftdurchlässigkeit stark vermindern.

Vorteilhafterweise wird bereits beim Stanzvorgang gemäß Schritt A. die Absorberschicht und ggf. die luftdurchlässigen Schichten und ggf. die Abdeckung, in den Teilbereichen, welche überspritzt werden, gepresst und die Kammern somit vorgeformt.

In einer weiteren Ausführungsform werden die Abdeckungen, die Trägerschicht und ggf. das Schutzgitter durch Spritzgießen hergestellt und ggf. die Abdeckungen in einem weiteren Schritt

### E. perforiert.

Bevorzugt werden die Verbindungsflächen während des Spritzgussschrittes D. hergestellt und ggf. texturiert.

Alternativ wird der erfindungsgemäße Belüftungseinsatz so hergestellt, dass alle Bestandteile des Belüftungseinsatzes mit Ausnahme des Absorbers beim Herstellungsprozess des zu belüftenden Objekts hergestellt werden, beispielsweise durch Überspritzen entsprechender Formteile oder Strukturen. Der Absorber wird dann in einem zweiten Verfahrensschritt in den Belüftungseinsatz eingebracht, beispielsweise durch Injektion oder durch Hochdruck eingepresst. Weiterhin ist es auch möglich den Absorber mit den Formteilen oder Strukturen zu überspritzen.

Die Erfindung wird anhand der nachstehenden Figuren näher erläutert, ohne sie auf diese zu beschränken. Es zeigen:
- Figur 1: eine Explosionszeichnung eines erfindungsgemäßen Belüftungsein- satzes,
- Figur 2a und 2b: Explosionszeichnung einer weiteren Ausführungsform des erfindungs- gemäßen Belüftungseinsatzes von der Ober- und der Unterseite,
- Figur 3a und 3b: eine Aufsicht auf zwei verschiedene Ausführungsformen des erfin- dungsgemäßen Belüftungseinsatzes,
- Figur 4a: eine Aufsicht auf eine weiteren Ausführungsform des erfindungsgemä- ßen Belüftungseinsatzes,
- Figur 4b: eine Schnittzeichnung durch zwei verschiedene Ausführungsformen des erfindungsgemäßen Belüftungseinsatzes,
- Figur 5: eine weitere Ausführungsform des erfindungsgemäßen Belüftungsein- satzes mit Transportelementen und
- Figur 6: eine Aufsicht auf eine Kernschicht mit Haltern.

In Figur 1 ist eine Ausführungsform des erfindungsgemäßen Belüftungseinsatzes 1 dargestellt. Oberhalb des Kernlementes 9 ist eine Abdeckung 5 angeordnet und unterhalb des Kernelements eine weitere Abdeckungsschicht 6 angeordnet. Das Kernelement 9, das aus einer ersten luftdurchlässigen Schicht, einer Absorberschicht und einer zweiten luftdurchlässigen Schicht, gebildet wird, ist hier als Absorbervlies ausgebildet. Sowohl die beiden Abdeckungen 5 und 6, als auch das Kernelement 9 weisen Durchtrittsöffnungen 11 in Form von Löchern auf. Die Durchtrittsöffnungen 11 sind gleichmäßig über die gesamte Fläche der Abdeckungen 5, 6 und des Kernelementes 9 verteilt. Durch diese Durchtrittsöffnungen läuft während des Spritzgussvorgangs das fließfähige Material, aus dem Trägerschicht 7 hergestellt wird. Die Trägerschicht 7 ist hier zur besseren Veranschaulichung als obere Trägerschicht 7a und untere Trägerschicht 7b dargestellt, es handelt sich jedoch um ein Teil, das das Kernelement und die Abdeckungen vollständig umgibt und an den Durchtrittsöffnungen zusätzlich durchdringt und miteinander verbindet. Durch die Gitterstruktur der Trägerschicht 7 werden Kammern 8 ausgebildet, die die Ausdehnung des Absorbers begrenzen. Das Kernelement 9 und die Abdeckungen 5, 6 weisen zudem Haltevorrichtungen 10 auf, die für die Positionierung des Grundelements aus Abdeckung und Kernelement in der Spritzgussvorrichtung dienen. Nach außen wird die Trägerschicht 7 bzw. 7b und oder ggf. die Abdeckung durch die Verbindungsfläche 12a bzw. 12b verlängert, die zur Befestigung des Belüftungseinsatzes am jeweiligen Gegenstand dient.

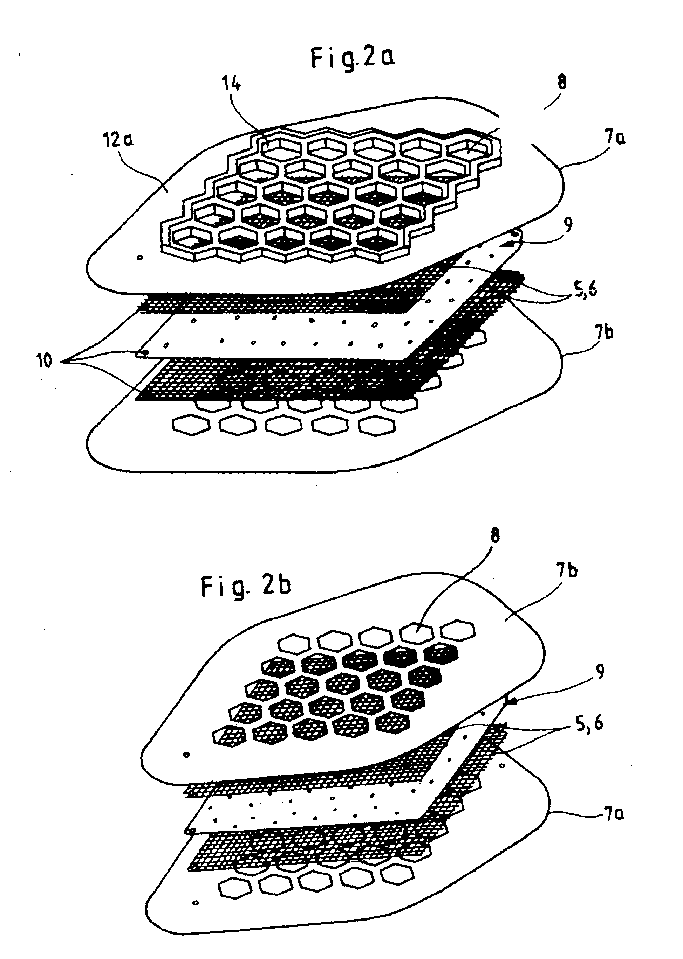

In Figur 2a ist eine weitere Ausführungsform des erfindungsgemäßen Belüftungseinsatzes dargestellt. Die Kammern 8 in der Trägerschicht 7a bzw. 7b sind hier wabenförmig ausgebildet. Der weitere Aufbau aus Kernelement 9 und Abdeckungen 5, 6 entspricht dem Aufbau des Belüftungseinsatzes in Figur 1. Die Oberseite der Trägerschicht 7a weist zudem im Bereich der Kammern 8 ein Schutzgitter 14 auf, das sich über die Oberfläche der Trägerschicht 7a erhebt und Teil dieser Trägerschicht ist. Das Schutzgitter dient der Sicherung des von der Trägerschicht umgebenen Absorberkerns gegen äußere Belastungen. Außerhalb des Schutzgitters 14 wird die Trägerschicht 7 durch die Verbindungsflächen 12 weiter fortgesetzt.

Wie in Figur 2b zu erkennen ist, weist die Unterseite des Belüftungseinsatzes auf der Trägerschicht 7b die identische Kammerstruktur mit Kammern 8 auf, jedoch ist in dieser Ausführung auf der Trägerschichtunterseite kein Schutzgitter ausgebildet.

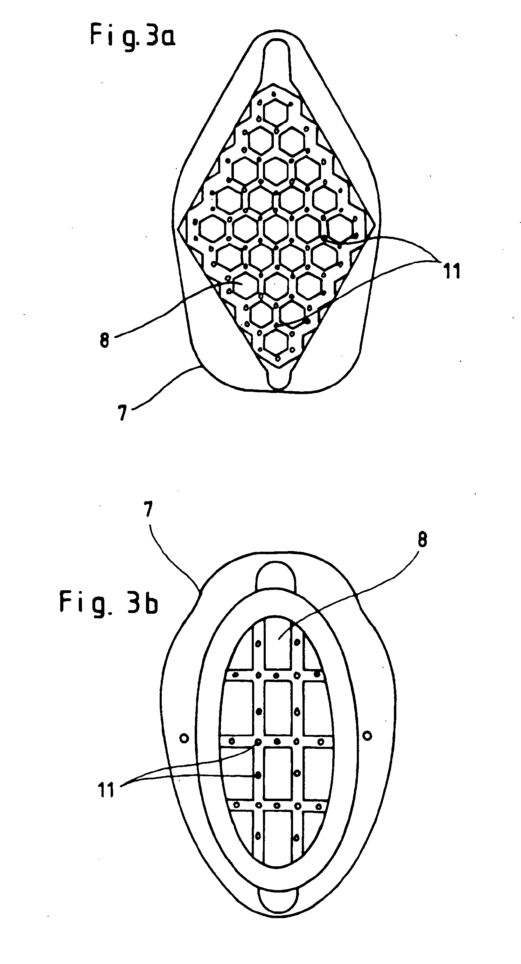

In Figur 3a und 3b ist jeweils eine Aufsicht auf einen erfindungsgemäßen Belüftungseinsatz abgebildet. Dabei ist zu erkennen, dass die Kammern 8 hier durch das Material der Trägerschicht 7 gebildet werden. Zudem sind die vom Material der Trägerschicht durchflossenen Durchtrittsöffnungen 11 erkennbar.

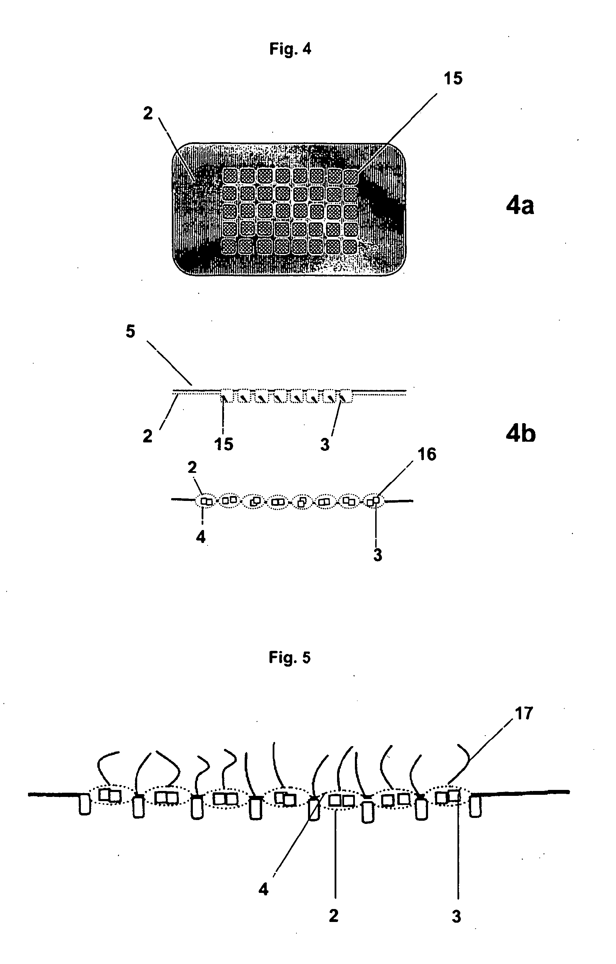

Figur 4a zeigt das Grundelement einer weiteren Ausführungsform eines erfindungsgemäßen Belüftungseinsatzes. Wie in Figur 4a ersichtlich ist, sind dabei in die luftdurchlässige Schicht 2 Einwölbungen 15 eingestanzt. Die Einwölbungen 15 dienen zur Aufnahme von Bauteilen, die mit dem Absorber befüllt sind.

Figur 4b zeigt zwei Schnitte durch entsprechende Belüftungselemente. Dabei ist der Absorber 3 in den Einwölbungen 15 zu erkennen, die in der luftdurchlässigen Schicht 2 ausgebildet sind. Oberhalb der absorberhaltigen Bauelemente ist die Abdeckung 5 angeordnet. Figur 4b zeigt zusätzlich einen Schnitt durch eine weitere Ausführungsform, bei der die luftdurchlässigen Schichten 2 und 4 Hohlkörper 16 ausbilden. In den Hohlkörpern 16 kann der Absorber direkt oder als absorberhaltiges Bauteil angeordnet sein.

Figur 5 zeigt einen Schnitt durch eine weitere Ausführungsform eines erfindungsgemäßen Belüftungseinsatzes. Der Belüftungseinsatz weist Transportelemente 17 auf, die aus dem Belüftungseinsatz nach oben ragen. Die Transportelemente sind mit der luftdurchlässigen Schicht 4 und/oder dem Absorber 3 verbunden und dienen dazu, die Feuchtigkeit abzutransportieren und die Verdunstungsfläche zu vergrößern.

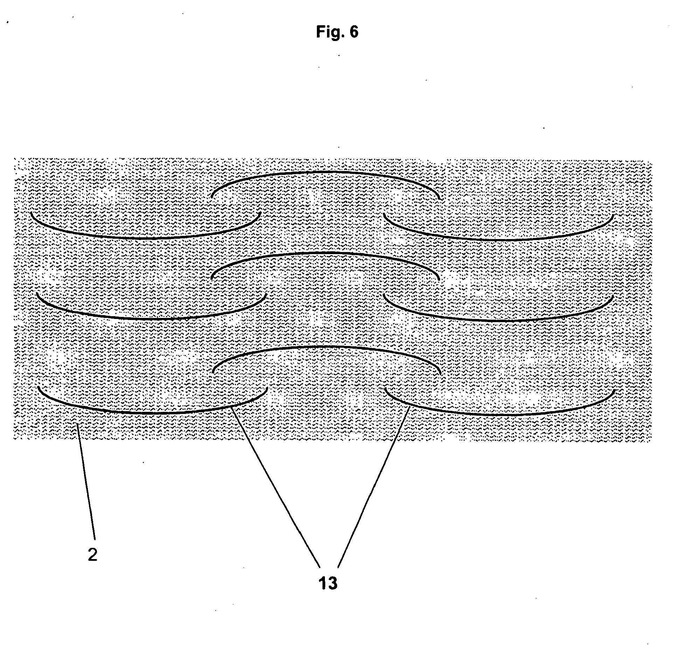

Figur 6 zeigt eine Aufsicht auf ein Kernelement aus luftdurchlässigen Schichten und dazwischen platzierten Absorber. Die hier gezeigte luftdurchlässige Schicht 2 ist mit streifenförmigen Haltern 13 versehen, die die beiden luftdurchlässigen Schichten und den dazwischen liegenden Absorber fest miteinander verbinden.

### Bezugszeichenliste

- 1: Belüftungseinsatz
- 2: luftdurchlässige Schicht
- 3: Absorber
- 4: luftdurchlässige Schicht
- 5: Abdeckung
- 6: Abdeckung
- 7a,b: Trägerschicht
- 8: Kammer
- 9: Kernelement
- 10: Haltevorrichtung
- 11: Durchtrittsöffnung
- 12: Verbindungsfläche
- 13: Halter
- 14: Schutzgitter
- 15: Einwölbungen
- 16: Hohlkörper
- 17: Transportelemente

## Patentansprüche

1. Selbstschließender Belüftungseinsatz (1) zur Belüftung von Textilien, Schuhen oder Gegenständen aufgebaut aus zumindest
- einem Kernelement (9) mit
- einer ersten luftdurchlässige Schicht (2),
- einem auf der ersten luftdurchlässigen Schicht (2) angeordneten Absorber (3), der bei Kontakt mit Flüssigkeit aufquillt,
- einer zweite luftdurchlässige Schicht (4),
- Abdeckungen (5,6) oberhalb der ersten und der zweiten luftdurchlässigen Schicht (2,4),
- einer Trägerschicht (7) auf den Abdeckungen (5,6)
**dadurch gekennzeichnet, dass**
die Abdeckungen (5,6) und/oder die Trägerschichten (7) ggf. die luftdurchlässigen Schichten (2,4) in Teilbereichen zusammendrücken und eine Kammerstruktur ausbilden, wobei durch die Kammern (8) die maximale Ausdehnung des Absorbers begrenzt wird und durch die Begrenzung eine Verdichtung des Absorbers während des Quellvorgangs erfolgt, die den Belüftungseinsatz verschließt.

2. Belüftungseinsatz gemäß Anspruch 1, **dadurch gekennzeichnet, dass** das Kernelement (9) und ggf. die Abdeckungen Haltevorrichtungen (10) aufweisen, die eine Positionierung des Elements in der Spritzgussform ermöglichen.

3. Belüftungseinsatz nach Anspruch 1 oder 2, **dadurch gekennzeichnet, dass** das Kernelement aus luftdurchlässigen Schichten (2,4) und der Absorberschicht (3) und ggf. die Abdeckungen (5,6) Durchtrittsöffnungen (11) aufweisen, durch die bei der Herstellung des Belüftungseinsatzes das fließfähige Material für die Trägerschicht hindurchfließt.

4. Belüftungseinsatz nach einem der vorhergehenden Ansprüche, **dadurch gekennzeichnet, dass** das Kernelement (9) des Belüftungseinsatzes aus luftdurchlässigen Schichten (2,4) und Absorberschicht (3) einteilig ausgebildet ist, bevorzugt als mit Absorber ausgerüstetes Vlies und vorzugsweise Kernelement (9) und Abdeckungen (5,6) einteilig ausgebildet sind, besonders bevorzugt als Sandwichlaminat.

5. Belüftungseinsatz nach einem der vorhergehenden Ansprüche, **dadurch gekennzeichnet, dass** der Absorber mit einem Füllstoff vermischt ist und mit diesem gemeinsam die Absorberschicht bildet.

6. Belüftungseinsatz gemäß einem der vorhergehenden Ansprüche, **dadurch gekennzeichnet, dass** die Abdeckung (5,6) Teil der Trägerschicht (7) ist.

7. Belüftungseinsatz gemäß einem der vorhergehenden Ansprüche, **dadurch gekennzeichnet, dass** der Belüftungseinsatz zusätzlich Verbindungsflächen (12) aufweist, die bevorzugt aus demselben Material wie die Trägerschicht (7) und/oder die Abdeckungen (5,6) bestehen und bevorzugt als Verlängerung der Trägerschicht ausgebildet sind.

8. Belüftungseinsatz gemäß Anspruch 7, **dadurch gekennzeichnet, dass** die Verbindungsflächen (12) magnetisch sind.

9. Belüftungseinsatz gemäß einem der vorhergehenden Ansprüche, **dadurch gekennzeichnet, dass** die Trägerschicht (7) ein Schutzgitter (14) oder eine Schutzschicht ausbildet, die den Belüftungseinsatz vor Beschädigungen schützt.

10. Belüftungseinsatz gemäß einem der vorhergehenden Ansprüche, **dadurch gekennzeichnet, dass** die erste und zweite luftdurchlässige Fläche mit der zwischen den Flächen angeordneten Absorberschicht und ggf. die Abdeckungen über durch die Flächen hindurchgehende Halter (13) miteinander verbunden sind und die Halter (13) vorzugsweise streifenförmig, punktförmig kreisförmig oder linienförmig ausgebildet sind.

11. Belüftungseinsatz gemäß einem der vorhergehenden Ansprüche, **dadurch gekennzeichnet, dass** die beiden Trägerschichten (7a,7b) einteilig ausgebildet sind und bevorzugt im Spritzgussverfahren hergestellt sind.

12. Belüftungseinsatz gemäß einem der vorhergehenden Ansprüche, **dadurch gekennzeichnet, dass** die Absorberschicht im Durchmesser geringer ist als die durch die Abdeckungen (5,6) gebildete Kammer (8) und/oder die Menge des trockenen Absorbers so gewählt ist, das die Kammer bei trockenem Absorber luftdurchlässig ist.

13. Belüftungseinsatz gemäß einem der vorhergehenden Ansprüche, **dadurch gekennzeichnet, dass** die luftdurchlässigen Schichten (2,4) so mit einander verbunden sind, dass sie verbundene Hohlkörper (16) mit einem vorzugsweise runden Querschnitt bilden.

14. Belüftungseinsatz gemäß einem der vorhergehenden Ansprüche, **dadurch gekennzeichnet, dass** die erste luftdurchlässige Fläche (2) über eine Vielzahl von Einwölbungen (15) verfügt, die mit dem Absorber (3) und ggf. Füllmaterial befüllt sind.

15. Belüftungseinsatz gemäß einem der vorhergehenden Ansprüche, **dadurch gekennzeichnet, dass** der Absorber ein quellfähiges Polymer, ausgewählt aus der Gruppe Polyacrylsäure, Polyacrylsäurecopolymere vernetzten Natriumpolyacrylat, Kasein, Eiweiß und Thermoplast-Elastomer-Composite, ist.

16. Belüftungseinsatz gemäß einem der vorhergehenden Ansprüche, **dadurch gekennzeichnet, dass** die Abdeckungen aus einem feinmaschigen metallischen Netz (Metallmesch) bestehen.

17. Belüftungseinsatz gemäß einem der vorhergehenden Ansprüche, bei dem der Absorber in einem separaten Bauteil zwischen den Abdeckungen angeordnet ist, bevorzugt ein Gitter, auf das Abdeckungen als Ober- und Unterseite aufgebracht werden, besonders bevorzugt mittels Ultraschallverschweißen, Schmelzen und/oder Kleben.

18. Belüftungseinsatz gemäß Anspruch 17, **dadurch gekennzeichnet, dass** durch Spritzen von Kunststoff zwischen die Abdeckungen einzelne Kammern gebildet werden.

19. Belüftungseinsatz gemäß einem der vorhergehenden Ansprüche, **dadurch gekennzeichnet, dass** der Belüftungseinsatz zusätzlich Transportelemente (17) aufweist, die mit der luftdurchlässigen Schicht (2,4) und ggf. mit der Absorberschicht (3) in Berührung stehen und vorzugsweise fadenförmig, streifenförmig oder noppenförmig ausgebildet sind.

20. Selbstschließender Belüftungseinsatz zur Belüftung von Textilien, Schuhen oder Gegenständen, aufgebaut aus zumindest
- einer Absorberschicht mit einem Absorber, der bei Kontakt mit Flüssigkeit aufquillt und
- einer Trägerschicht,
**dadurch gekennzeichnet, dass**
die Trägerschicht zumindest teilweise luftdurchlässig ist oder luftundurchlässig ist und die Absorberschicht bis auf Teilbereiche vollständig umgibt und die Trägerschicht die maximale Ausdehnung des Absorbers so begrenzt, dass durch die Begrenzung eine Verdichtung des Absorbers während des Quellvorgang erfolgt, die den Belüftungseinsatz verschließt.

21. Belüftungseinsatz gemäß Anspruch 20, **dadurch gekennzeichnet, dass** die Trägerschicht durch ein nicht luftdurchlässiges Material, das teilweise perforiert ist, oder durch Bestandteile des zu belüftenden Objekts selbst ausgebildet wird.

22. Belüftungseinsatz gemäß einem der Ansprüche 20 oder 21, **dadurch gekennzeichnet dass** der Absorber ein quellfähiges Polymer, ausgewählt aus der Gruppe Polyacrylsäure, Polyacrylsäurecopolymere vernetzten Natriumpolyacrylat, Kasein, Eiweiß und Thermoplast-Elastomer-Composite, ist.

23. Belüftungseinsatz gemäß einem der Ansprüche 20 oder 22, **dadurch gekennzeichnet dass** die Trägerschicht aus einem feinmaschigen metallischen Netz (Metallmesch), perforierter Kunststoff oder einem feinmaschigen Kunststoffnetz besteht.

24. Belüftungseinsatz gemäß einem der Ansprüche 20 bis 23, **dadurch gekennzeichnet dass** die Absorberschicht ein Absorberfleece ist.

25. Belüftungseinsatz gemäß einem der Ansprüche 20 bis 24, **dadurch gekennzeichnet dass** der Belüftungseinsatz als Hülsenelement ausgestaltet ist, bei dem eine hülsen- oder röhrenförmige Trägerschicht das Kernelement bzw. den Absorber umgibt.

26. Belüftungseinsatz gemäß Anspruch 25, **dadurch gekennzeichnet dass** die Absorberschicht ein fadenförmiger Träger ist, der mit Absorber beschichtet ist.

27. Belüftungseinsatz gemäß Anspruch 20 oder 22, **dadurch gekennzeichnet, dass** das Trägermaterial und die Absorberschicht aus einem mit dem Absorber versehenen Abstandsgewirk gebildet sind.

28. Belüftungseinsatz gemäß einem der Ansprüche 20 bis 28, **dadurch gekennzeichnet, dass** der Absorber mit einem Füllstoff vermischt ist und/oder mit diesem gemeinsam die Absorberschicht bildet.

29. Verwendung des Belüftungseinsatzes gemäß einem der Ansprüche 1 bis 28 zur Belüftung von
- Schlafsäcken, Zelten, Rucksäcken oder Taschen,
- Helmen, Protektoren, Jacken, Schutzanzügen, Schutzbrillen oder Brillen,
- medizinisch oder orthopädischen Verbänden, orthopädischen oder medizinischen Schienen, Schuhen, Handschuhen, Textilien, Bekleidungsstücken, Abdeckungen oder Decken.

30. Verwendung des Belüftungseinsatzes gemäß einem der Ansprüche 1 bis 28 in Verpackungen, elektronischen Geräten, Trockensilos, Fensterrahmen, Dachbedeckungen oder deren Bestandteile.

31. Verfahren zur Herstellung eines Belüftungseinsatzes zur Belüftung von Textilien, Schuhen oder Gegenständen, wobei der Belüftungseinsatz aufgebaut ist aus zumindest
- einem absorberhaltigen Kernelement (9) ),
- einer oberen und einer unteren Abdeckung (5,6),
- einer Trägerschicht (7) auf den Abdeckungen (5,6)
wobei das Verfahren mindestens die Schritte umfasst
B. Ausstanzen eines Grundelementes oder in Formschneiden des Grundelements aus zumindest der Kernelementschicht, Perforieren des Grundelements und zum Erzeugen von Durchtrittsöffnung und ggf. Pressen und
C. Positionieren des perforierten Grundelementes in einer Spritzgussform, vorzugsweise über die Haltevorrichtungen,
D. Spritzgießen der Trägerschicht, wobei das Material der Trägerschicht beim Spritzgießen durch die Durchtrittsöffnungen des Grundelements gepresst wird.

32. Verfahren gemäß Anspruch 31, **dadurch gekennzeichnet, dass** vor Ablauf von Schritt B. ein weiterer Verfahrensschritt A. ausgeführt wird, unter
A. Anordnen einer Kernelementschicht auf einer Abdeckungsschicht und Anordnen einer zweiten Abdeckungsschicht auf der Kernelementschicht

33. Verfahren gemäß Anspruch 31, **dadurch gekennzeichnet, dass** in Schritt B. die offenen Seiten des Grundelements durch thermoplastisches Verschweißen, Ultraschallschweißen oder andere Schweißverfahren abgedichtet oder beim Spritzgießen in Schritt C. durch den Kunststoff verschlossen werden.

34. Verfahren gemäß einem der Ansprüche 31 oder 33, **dadurch gekennzeichnet, dass** die Abdeckungen, die Trägerschicht und ggf. das Schutzgitter durch Spritzgießen hergestellt werden und die Abdeckungen in einem weiteren Schritt
E. perforiert werden.

35. Verfahren gemäß einem der Ansprüche 31 bis 34, **dadurch gekennzeichnet, dass** die zu überspritzenden Schichten, zumindest die Absorberschicht, beim Ausstanzen mit Durchflussöffnungen und/oder Haltevorrichtungen versehen werden.

36. Verfahren gemäß einem der Ansprüche 31 bis 35, **dadurch gekennzeichnet, dass** während des Spritzgussschrittes D. die Verbindungsflächen hergestellt werden und diese vorzugsweise texturiert sind.

## Claims

1. A self-closing ventilation insert (1) for ventilation of textiles, shoes or articles, comprising at least
- a core element (9) having
- a first air-permeable layer (2),
- an absorber (3) which is arranged on the first air-permeable layer (2) and swells up on contact with liquid,
- a second air-permeable layer (4),
- coverings (5, 6) above the first and second air-permeable layers (2, 4),
- a carrier layer (7) on the coverings (5, 6),
**characterized in that** the coverings (5, 6) and/or the carrier layers (7) optionally compress the air-permeable layers (2, 4) in partial areas and form a chamber structure, such that the maximum expansion of the absorber is limited by the chambers (8) and compaction of the absorber during the swelling operation takes place due to this restriction, thereby closing the ventilation insert.

2. The ventilation insert according to Claim 1, **characterized in that** the core element (9) and optionally the coverings have retaining devices (10) which allow positioning of the element in the injection mold.

3. The ventilation insert according to Claim 1 or 2, **characterized in that** the core element of air-permeable layers (2, 4) and the absorber layer (3) and optionally the coverings (5, 6) have flow-through openings (11) through which the material capable of flowing for the carrier layer flows during production of the ventilation insert.

4. The ventilation insert according to any of the preceding claims, **characterized in that** the core element (9) of the ventilation insert is formed in one piece from air-permeable layers (2, 4) and the absorber layer (3), preferably as a non-woven equipped with absorber and in which preferably core element (9) and coverings (5, 6) are formed in one piece, especially preferably as a sandwich laminate.

5. The ventilation insert according to any one of the preceding claims, **characterized in that** the absorber is mixed with a filler and forms the absorber layer jointly with the latter.

6. The ventilation insert according to any one of the preceding claims, **characterized in that** the covering (5, 6) is part of the carrier layer (7).

7. The ventilation insert according to any one of the preceding claims, **characterized in that** the ventilation insert additionally has joining faces (12) that are preferably made of the same material as the carrier layer (7) and/or the coverings (5, 6) and are preferably designed as an extension of the carrier layer.

8. The ventilation insert according to Claim 7, **characterized in that** the joining faces (12) are magnetic.

9. The ventilation insert according to any one of the preceding claims, **characterized in that** the carrier layer (7) forms a protective grid (14) or a protective layer which protects the ventilation insert from damage.

10. The ventilation insert according to any one of the preceding claims, **characterized in that** the first and second air-permeable surfaces with the absorber layer arranged between the surfaces and optionally the coverings are joined together by retaining devices (13) formed through the surfaces, and these retaining devices (13) are preferably embodied as strips, points, circles or lines.

11. The ventilation insert according to any one of the preceding claims, **characterized in that** the two carrier layers (7a, 7b) are formed in one piece and are preferably manufactured by the injection molding.

12. The ventilation insert according to any one of the preceding claims, **characterized in that** the absorber layer has a smaller diameter than the chamber (8) formed by the coverings (5, 6) and/or the quantity of dry absorber is selected so that the chamber is air-permeable when the absorber is dry.

13. The ventilation insert according to any one of the preceding claims, **characterized in that** the air-permeable layers (2, 4) are joined together so that they form connected hollow bodies (16), preferably with a round cross section.

14. The ventilation insert according to any one of the preceding claims, **characterized in that** the first air-permeable surface (2) has a plurality of concave vaultings (15) which are filled with the absorber (3) and optionally with filler material.

15. The ventilation insert according to any one of the preceding claims, **characterized in that** the absorber is a swellable polymer selected from the group consisting of polyacrylic acid, polyacrylic acid copolymers [and] crosslinked sodium polyacrylate, casein, protein and thermoplastic elastomer composites.

16. The ventilation insert according to any one of the preceding claims, **characterized in that** the coverings are made of a fine metallic mesh (metal mesh).

17. The ventilation insert according to any one of the preceding claims, wherein the absorber is arranged in a separate component between the coverings, preferably in a grid on which coverings are applied as the top side and bottom side, especially preferably by ultrasonic welding, melting and/or adhesive bonding.

18. The ventilation insert according to Claim 17, **characterized in that** individual chambers are formed by injection of plastic between the coverings.

19. The ventilation insert according to any one of the preceding claims, **characterized in that** the ventilation insert additionally has transport elements (17) which are in contact with the air-permeable layer (2, 4) and optionally with the absorber layer (3) and are preferably formed fibrous, striated or nubby.

20. The self-closing ventilation insert for ventilation of textiles, shoes or articles comprising at least
- one absorber layer with an absorber which swells on contact with liquid, and
- a carrier layer,
**characterized in that** the carrier layer is at least partially air permeable or is air impermeable and completely surrounds the absorber layer except for partial areas, and the carrier layer limits the maximum expansion of the absorber such that through this limitation there is a compaction of the absorber during the swelling process, closing the ventilation insert.

21. The ventilation insert according to Claim 20, **characterized in that** the carrier layer is formed by a non-air-permeable material, which is partially perforated or by components of the object itself that is to be ventilated.

22. The ventilation insert according to any one of Claim 20 or 21, **characterized in that** the absorber is a swellable polymer selected from the group of polyacrylic acid, polyacrylic acid copolymer [and] crosslinked sodium polyacrylate, casein, protein and thermoplastic elastomer composites.

23. The ventilation insert according to any one of Claim 20 or 22, **characterized in that** the carrier layer comprises a fine metallic mesh, perforated plastic or a fine plastic mesh.

24. The ventilation insert according to any one of Claim 20 to 23, **characterized in that** the absorber layer is an absorber fleece.

25. The ventilation insert according to any one of Claim 20 to 24, **characterized in that** the ventilation insert is formed as a sleeve element where a sleeve shape or tubular carrier layer surrounds the core material and/or the absorber.

26. The ventilation insert according to Claim 25, **characterized in that** the absorber layer is a fibrous carrier which is coated with the absorber.

27. The ventilation insert according to Claim 20 or 22, **characterized in that** the carrier material and the absorber layer are made of a spacer knit provided with the absorber.

28. The ventilation insert according to any one of Claim 20 to 28, **characterized in that** the absorber is mixed with a filler and/or together with the filler jointly forms the absorber layer.

29. The use of the ventilation insert according to any one of Claim 1 to 28 for ventilation of
- sleeping bags, tents, backpacks or bags,
- helmets, protectors, jackets, protective clothing, safety goggles or glasses,
- medical or orthopedic dressings, orthopedic or medical splints, shoes, gloves, textiles, clothing items, covers or coverings.

30. The use of the ventilation insert according to any one of Claim 1 to 28 in packages, electronic devices, dry silos, window frames, roof coverings or components thereof.

31. The method for producing a ventilation insert for ventilation of textiles, shoes or articles, wherein the ventilation insert is composed of at least
- one core element (9) containing the absorber,
- one upper covering and one lower covering (5, 6),
- one carrier layer (7) on the coverings (5, 6),
wherein the method comprises at least the steps:
B. punching out a basic element or shape cutting of the basic element from at least the core element layer, perforating the basic element and creating the flow-through openings and optionally pressing and
C. positioning the perforated basic element in an injection mold, preferably by means of the retaining devices,
D. injection molding of the carrier layer such that the material of the carrier layer is pressed through the flow-through openings in the basic element during injection molding.

32. The method according to Claim 31, **characterized in that** another method step A is performed before the end of step B, during which
A. a core element layer is arranged on a covering layer and a second covering layer is arranged on the core element layer.

33. The method according to Claim 31, **characterized in that** in step B the open sides of the basic element are sealed by thermoplastic welding, ultrasonic welding or other welding methods or is closed by the plastic during injection molding in step C.

34. The method according to any one of Claim 31 or 33, **characterized in that** the coverings, the carrier layer and optionally the protective grid are produced by injection molding, and in another step
E, the coverings are perforated.

35. The method according to any one of Claim 31 to 34, **characterized in that** the layers to be covered by injection, at least the absorber layer, are provided with flow-through openings and/or retaining devices, at least the absorber layer in punching out.

36. The method according to any one of Claim 31 to 35, **characterized in that** during the injection molding step D, the joining faces are produced and are preferably textured.

## Revendications

1. Garniture de ventilation à auto-fermeture pour aérer des textiles, des chaussures ou des objets, qui est composée d'au moins :
- un noyau (9) comprenant :
. une première couche (2) perméable à l'air
. sur cette couche (2), un absorbeur (3) qui gonfle au contact d'un liquide
. une seconde couche (4) perméable à l'air,
- de couvertures (5, 6) sur la première et sur la seconde couche perméables à l'air (2, 4),
- une couche porteuse (7) sur chacune des couvertures (5, 6),
cette garniture étant **caractérisée en ce que** les couvertures (5, 6) et/ou les couches porteuses (7) éventuellement compriment les couches perméables à l'air (2, 4) dans des zones partielles en formant une structure de chambre, la chambre (8) ainsi formée limitant l'extension maximale de l'absorbeur et cette limitation produisant, lors du gonflement, une densification de l'absorbeur qui a pour effet d'obturer la garniture de ventilation.

2. Garniture de ventilation selon la revendication 1, **caractérisée en ce que** le noyau (9) et éventuellement les couvertures présentent des dispositifs de maintien qui permettent de positionner le noyau dans le moule de coulée par injection.

3. Garniture de ventilation selon la revendication 1 ou 2, **caractérisée en ce que** le noyau constitué des couches (2, 4) transparentes à l'air, de la couche absorbante (3) et éventuellement des couvertures (5, 6) présente des ouvertures de passage (11) à travers lesquelles passe le matériau coulant destiné à la couche porteuse, lors de la fabrication de la garniture de ventilation.

4. Garniture de ventilation selon une des revendications précédentes, **caractérisée en ce que** le noyau (9) de la garniture de ventilation, constitué des couches (2, 4) perméables à l'air et de la couche absorbante (3), forme une seule pièce de préférence sous la forme d'un non-tissé constitué en absorbeur, et avantageusement le noyau (9) et les couvertures (5, 6) forment une seule pièce, de préférence un sandwich laminé.

5. Garniture de ventilation selon une des revendications précédentes, **caractérisée en ce que** l'absorbeur est mélangé à un matériau de remplissage avec lequel il forme la couche absorbante..

6. Garniture de ventilation selon une des revendications précédentes, **caractérisée en ce que** la couverture (5, 6) est une partie de la couche porteuse (7).

7. Garniture de ventilation selon une des revendications précédentes, **caractérisée en ce qu'**elle présente en plus des surfaces de liaison (12), sont de préférence du même matériau que la couche porteuse (7) et/ou les couvertures (5, 6) et constituent avantageusement un prolongement de cette couche.

8. Garniture de ventilation selon la revendication 7, **caractérisée en ce que** les surfaces de liaison (12) sont magnétiques.

9. Garniture de ventilation selon une des revendications précédentes, **caractérisée en ce que** la couche porteuse (7) constitue une grille de protection (14) ou une couche de protection, qui met la garniture à l'abri de détérioration.

10. Garniture de ventilation selon une des revendications précédentes, **caractérisée en ce que** la première et la seconde surface perméable à l'air, avec la couche absorbante disposée entre elles et éventuellement les couvertures sont reliées par des supports (13) qui traversent les surfaces et qui ont de préférence la forme de bandes, de points, de cercles ou de lignes.

11. Garniture de ventilation selon une des revendications précédentes, **caractérisée en ce que** les deux couches porteuses (7a, 7b) sont monoblocs et sont de préférence coulées par injection.

12. Garniture de ventilation selon une des revendications précédentes, **caractérisée en ce que** la couche absorbante a un diamètre inférieur à celui de la chambre (8) formée par les couvertures (5, 6) et/ou la masse de l'absorbeur est choisie de manière que la chambre est perméable à l'air quand l'absorbeur est sec.

13. Garniture de ventilation selon une des revendications précédentes, **caractérisée en ce que** les couches (2, 4) perméables à l'air sont reliées entre elles de manière à former des corps creux (16) dont la section transversale est de préférence ronde.

14. Garniture de ventilations selon une des revendications précédentes, **caractérisée en ce que** la première surface (2) perméable à l'air présente une pluralité d'enfoncements (15) qui sont remplis par l'absorbeur (3) et éventuellement par un matériau de remplissage.

15. Garniture de ventilation selon une des revendications précédentes, **caractérisée en ce que** l'absorbeur est un polymère pouvant gonfler, choisi dans le groupe constitué par l'acide polyacrylique, le polyacrylate de sodium réticulé avec des copolymères d'acide polyacrylique, la caséine, le blanc d'oeuf et des composites de thermoplastique et d'élastomère.

16. Garniture de ventilation selon une des revendications précédentes, **caractérisée en ce que** les couvertures sont constituées d'un réseau métallique à mailles fines.

17. Garniture de ventilation selon une des revendications précédentes, dans laquelle l'absorbeur est disposé dans un composant séparé situé entre les couvertures, de préférence une grille sur laquelle sont montées les couvertures en tant que faces supérieure et inférieure, en étant fixées notamment de préférence par soudage aux ultrasons, fusion ou collage.

18. Garniture de ventilation selon la revendication 17, **caractérisée en ce que** des chambres individuelles sont formées par injection de matière plastique entre les couvertures.

19. Garniture de ventilation selon une des revendications précédentes, **caractérisée en ce que** la garniture de ventilation présente en plus des éléments de transport (17) qui sont en contact avec la couche (2, 4) perméable à l'air et éventuellement avec la couche absorbante (3) et qui ont de préférence la forme de fils, de bandes ou de boutons de fils.

20. Garniture de ventilation à auto-fermeture pour aérer des textiles, des chaussures ou des objets, qui est composé d'au moins :
- une couche absorbante faite d'un absorbeur qui gonfle au contact d'un liquide,
- une couche porteuse,
cette garniture étant **caractérisée en ce que** la couche porteuse est au moins partiellement perméable ou imperméable à l'air et entoure complètement la couche absorbante à l'exception de zones partielles, la couche porteuse limitant l'expansion de l'absorbeur de manière à produire pendant le gonflement de l'absorbeur, une densification de celui-ci produisant l'obturation de la garniture.

21. Garniture de ventilation selon la revendication 20, **caractérisée en ce que** la couche porteuse est constituée d'un matériau qui n'est pas perméable à l'air mais qui est perforé en partie, ou même de composants de l'objet à aérer.

22. Garniture de ventilation selon la revendication 20 ou 21, **caractérisée en ce que** l'absorbeur est un polymère gonflable, choisi dans le groupe constitué par l'acide polyacrylique, le polyacrylate de sodium réticulé avec des copolymères d'acide polyacrylique, la caséine, le blanc d'oeuf et des composites de thermoplastique et d'élastomère.

23. Garniture de ventilation selon la revendication 20 ou 22, **caractérisée en ce que** la couche porteuse est faite d'un réseau métallique à mailles fines, d'une matière plastique perforée ou d'un réseau plastique à mailles fines.

24. Garniture de ventilation selon une des revendications 20 à 23, **caractérisée en ce que** la couche absorbante est un fleece absorbant.

25. Garniture de ventilation selon une des revendications 20 à 24, **caractérisée en ce qu'**elle est constituée par un élément en forme de douille, dans lequel une couche porteuse en forme de douille ou de tube entoure le noyau et l'absorbeur.

26. Garniture de ventilation selon la revendication 25, **caractérisée en ce que** la couche absorbante est constituée par un support en forme de fil, qui est garni d'une couche d'absorbeur.

27. Garniture de ventilation selon la revendication 20 ou 22, **caractérisée en ce que** le matériau porteur et la couche absorbante sont constitués par un maillage d'espacement garni d'absorbeur.

28. Garniture de ventilation selon une des revendications 20 à 27, **caractérisée en ce que** l'absorbeur est mélangé à un matériau de remplissage et/ou forme avec celui-ci la couche absorbante.

29. Utilisation de la garniture de ventilation selon une des revendications 20 à 28, pour aérer :
- des sacs de couchage, des tentes, des sacs à dos ou des poches,
- des casques, des protecteurs, des vestes, des combinaisons protectrices, des lunettes de protection ou des lunettes,
- des bandages médicinaux ou orthopédiques, des baguettes orthopédiques ou médicinales, des chaussures, des gants, des textiles, des pièces de vêtement, couvertures ou des couettes.

30. Utilisation de la garniture de ventilation selon une des revendications 1 à 28, dans des emballages, des appareils électroménagers, des silos de séchage, des cadres de fenêtre, des couvertures de toit ou leurs composants.

31. Procédé pour fabriquer une garniture de ventilation servant à aérer des textiles, des chaussures ou des objets, cette garniture étant composée au moins :
- d'un noyau (9) contenant un absorbeur,
- d'une couverture supérieure et d'une couverture inférieure (5, 6),
- d'une couche porteuse (7) sur chacune des couvertures (5, 6),
ce procédé présentant au moins les étapes suivantes :
B découpage d'un élément de base ou découpage en forme de l'élément de base constitué d'au moins la couche du noyau, perforation de l'élément de base pour obtenir des ouvertures de passage, et éventuellement pressage,
C positionnement de l'élément de base perforé dans un moule d'injection, de préférence par l'intermédiaire de dispositifs de maintien,
D coulée par injection de la couche porteuse, le matériau qui la constitue étant pressé à travers les ouvertures de passage de l'élément de base, pendant l'injection.

32. Procédé selon la revendication 31, **caractérisé en ce qu'**avant la phase B est exécutée une phase A, à savoir la mise en place d'une couche de noyau sur la couche de couverture, et le dépôt d'une seconde couche de couverture sur la couche du noyau.

33. Procédé selon la revendication 31, **caractérisé en ce que** les côtés ouverts de l'élément de base sont rendus étanches par soudage thermoplastique, soudage par ultrasons ou autre procédé de soudage, ou sont, à l'étape C, bouchés par la matière plastique injectée.

34. Procédé selon la revendication 31 ou 33, **caractérisé en ce que** les couvertures, la couche porteuse et éventuellement la grille de protection sont réalisées par injection, les couvertures étant perforées à une autre étape E.

35. Procédé selon une des revendications 31 à 34, **caractérisé en ce que** les couches à injecter, et au moins la couche absorbante, sont dotées au découpage d'ouverture d'écoulement et/ou de dispositifs de maintien.

36. Procédé selon une des revendications 31 à 35, **caractérisé en ce que** pendant l'étape d'injection D, les surfaces de liaison sont réalisées et de préférence texturées.
